# EUROPÄISCHE PATENTSCHRIFT

(11) **EP 3 439 976 B1**
(45) Veröffentlichungstag und Bekanntmachung des Hinweises auf die Patenterteilung: **17.02.2021**
(21) Anmeldenummer: 17711150.7
(22) Anmeldetag: 16.03.2017
(51) Int. Cl.: B65D 5/02, B65D 5/06, B65D 5/42

(54) **PACKUNGSMANTEL, VERPACKUNG UND VERFAHREN ZUR HERSTELLUNG EINER VERPACKUNG**
PACKAGING SLEEVE, PACKAGING AND METHOD FOR PRODUCING A PACKAGING
ENVELOPPE D'EMBALLAGE, EMBALLAGE ET PROCÉDÉ DE FABRICATION D'UNE ENVELOPPE D'EMBALLAGE

(30) Priorität: 04.04.2016 DE 102016003826
(43) Veröffentlichungstag der Anmeldung: 13.02.2019
(73) Patentinhaber: SIG Technology AG, 8212 Neuhausen am Rheinfall (CH)
(72) Erfinder: DAMMERS, Matthias, 52477 Alsdorf (DE); BIRNINGER, Birgit, 52441 Linnich (DE); MEHLER, Christoph, 41199 Mönchengladbach (DE); VETTEN, Thomas, 40223 Düsseldorf (DE)
(74) Vertreter: Cohausz & Florack
(86) Internationale Anmeldenummer: PCT/EP2017/056198
(87) Internationale Veröffentlichungsnummer: WO 2017/174317

(56) Entgegenhaltungen:
- EP-A1- 0 027 350
- EP-A1- 0 277 517
- EP-A1- 1 080 880
- EP-A1- 2 392 517
- WO-A2-2009/141389
- DE-A1- 4 237 859
- DE-A1-102009 024 318
- DE-U1-202004 010 230
- FR-A1- 2 928 358

## Beschreibung

Die Erfindung betrifft einen Packungsmantel aus einem Verbundmaterial zur Herstellung einer Verpackung, umfassend: eine vordere Fläche, eine hintere Fläche, zwei Seitenflächen, Bodenflächen und Giebelflächen, die auf gegenüberliegenden Seiten der beiden Seitenflächen, der vorderen Fläche und der hinteren Fläche angeordnet sind, und eine Längsnaht, die zwei Kanten des Verbundmaterials zu einem umlaufenden Packungsmantel verbindet, wobei der Packungsmantel mehrere Faltlinien aufweist, wobei die beiden Seitenflächen jeweils eine durch die Seitenfläche verlaufende Scheinfaltlinie aufweisen, wobei der Packungsmantel ausschließlich entlang von beiden Scheinfaltlinien gefaltet ist und wobei der Packungsmantel sowohl im Bereich der Bodenflächen als auch im Bereich der Giebelflächen offen ist.

Die Erfindung betrifft zudem eine Verpackung aus einem Verbundmaterial, wobei die Verpackung entlang der Faltlinien gefaltet ist, wobei die Verpackung im Bereich der Bodenfläche und im Bereich der Giebelfläche verschlossen ist, und wobei die an die Scheinfaltlinien angrenzenden Teilbereiche beider Seitenwände jeweils in einem Winkelbereich zwischen 160° und 200°, insbesondere zwischen 170° und 190° zueinander angeordnet sind.

Die Erfindung betrifft schließlich ein Verfahren zur Herstellung einer Verpackung aus einem Packungsmantel aus einem Verbundmaterial.

Verpackungen können auf unterschiedliche Weisen und aus verschiedensten Materialien hergestellt werden. Eine weit verbreitete Möglichkeit ihrer Herstellung besteht darin, aus dem Verpackungsmaterial einen Zuschnitt herzustellen, aus dem durch Falten und weitere Schritte zunächst ein Packungsmantel und schließlich eine Verpackung entsteht. Diese Herstellungsart hat unter anderem den Vorteil, dass die Zuschnitte und Packungsmäntel sehr flach sind und somit platzsparend gestapelt werden können. Auf diese Weise können die Zuschnitte bzw. Packungsmäntel an einem anderen Ort hergestellt werden als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff oder Metall, insbesondere Aluminium. Derartige Verpackungen finden insbesondere in der Lebensmittelindustrie große Verbreitung.

Ein erster Herstellungsschritt besteht häufig darin, aus einem Zuschnitt durch Falten und Verschweißen oder Verkleben einer Naht einen umlaufenden Packungsmantel zu erzeugen. Die Faltung des Zuschnitts erfolgt üblicherweise entlang von geprägten Faltlinien. Die Lage der Faltlinien entspricht dabei der Lage der Kanten der aus dem Packungsmantel herzustellenden Verpackung. Dies hat den Vorteil, dass der Zuschnitt und der Packungsmantel ausschließlich an Stellen gefaltet werden, die bei der fertigen Verpackung ohnehin gefaltet sind. Im Sinne der vorliegenden Anmeldung wird deshalb unter einem Zuschnitt ein aus einer Bahnware von Verbundmaterial hergestellter in Längs- und Querrichtung fertiggeschnittener und im Umfang definierter Bogen ("flächenförmiger Verbund") verstanden. Ein Packungsmantel ist in Folge aus dem Bogen bzw. flächenförmigen Verbund hergestellt und verkaufsbereit fertiggestellt, wobei ein Packungsmantel als verkaufsfähig fertiggestellt anzusehen ist, wenn er ggf. nach Entnahme aus einer für den Transport von Herstellungsort zu Verwendungsort vorgesehenen Umverpackung ohne Weiteres für die Verarbeitung in einer dafür vorgesehenen Füllmaschine bereit ist. Das bedeutet insbesondere, dass am Packungsmantel keinerlei mechanische Eingriffe mehr nötig sind, um eine reibungslose Verarbeitung des Packungsmantels auf der dafür vorgesehenen Füllmaschine zu gewährleisten. Ein Konditionieren an das Umgebungsklima und/oder ein (zusätzliches) Sterilisieren (z.B. Kantensterilisationsverfahren der Anmelderin) können dagegen optional auch an einem fertigen Packungsmantel beim oder nach dem Transport zu dem vorgesehenen Verwendungsort vorgenommen werden. Beim Umformen und Siegeln entstehende Zwischenschritte bei der Herstellung des Packungsmantels aus einem Zuschnitt können dagegen noch nicht als Packungsmantel bezeichnet werden. Eine Verfahren zur Herstellung einer Verpackung aus einem Packungsmantel ist beispielsweise aus der WO 2015/003852 A9 bekannt (dort insbesondere Fig. 1A bis Fig. 1E). Die dort beschriebene Verpackung weist eine rechteckige Querschnittsfläche auf und ist insgesamt quaderförmig.

Neben Verpackungen mit viereckigen Querschnittsflächen sind auch Verpackungen mit Querschnittsflächen bekannt, die mehr als vier Ecken aufweisen. Aus der EP 0 936 150 B1 oder der US 6,042,527 sind beispielsweise Verpackungen mit achteckiger Querschnittsfläche bekannt. Die Form der Verpackungen wird dadurch erreicht, dass zusätzliche Faltlinien in den Zuschnitten vorgesehen sind.

Ein Nachteil der Faltung der beschriebenen Packungsmäntel entlang der späteren Verpackungskanten liegt jedoch darin, dass ausschließlich Verpackungen eckigen Querschnittsflächen hergestellt werden können. Zudem können ausschließlich Verpackungen hergestellt werden, deren Querschnittsfläche in vertikaler Richtung der Verpackung identisch ist. Alternative Gestaltungen wie beispielsweise Rundungen oder Freiformen anstelle der Kanten sind hingegen nicht möglich.

Packungsmäntel ("sleeves") und daraus hergestellte Verpackungen ("container") sind auch aus der EP 0 027 350 A1 bekannt. Durch den dort beschriebenen Packungsmantel können Verpackungen hergestellt werden, deren Querschnittsfläche sich in vertikaler Richtung verändert (viereckige Querschnittsflächen am Giebel und am Boden, dazwischen achteckige Querschnittsfläche). Auch diese Verpackung weist jedoch ausschließlich eckige Querschnittsflächen auf. Alternative Gestaltungen wie beispielsweise Rundungen oder Freiformen anstelle der Kanten werden auch in der EP 0 027 350 A1 nicht beschrieben. Der dort beschriebene Packungsmantel besteht zudem nicht aus Verbundmaterial, sondern aus Pappe oder Wellpappe. Für die Befüllung mit Flüssigkeiten wird ein Innenbeutel aus Kunststoff vorgeschlagen, so dass der Packungsmantel selbst nicht zur Herstellung einer flüssigkeitsdichten Verpackung geeignet zu sein braucht.

Packungsmäntel und daraus hergestellte Verpackungen werden auch in der GB 808,223 A beschrieben. Dort wird zunächst eine lange Materialbahn aus Pappe mit Faltlinien versehen und anschließend mit einer Kunststoffschicht beschichtet (Fig. 6). Nach dem Erzeugen einer Längsnaht (Fig. 7) wird die Materialbahn zu einem Schlauch mit einem rechteckigen Querschnitt aufgefaltet (Fig. 8). Die beiden Seitenflächen des Schlauches werden anschließend nach innen gefaltet, wodurch der Schlauch eine flache Form einnimmt (Fig. 9). In bestimmten Abständen werden quer verlaufenden Nähte erzeugt, entlang von denen der Schlauch gefaltet werden kann und somit einen Stapel bildet (Fig. 10). Durch eine Trennung des Schlauches im Bereich der quer verlaufenden Nähte werden einzelne Packungsmäntel erhalten, die bereits einseitig - durch die quer verlaufende Naht - verschlossen sind. Ein Nachteil dieser Vorgehensweise liegt darin, dass die Packungsmäntel bereits bei ihrer Abtrennung von dem Schlauch entlang von sechs Faltlinien gefaltet sind, von denen vier Faltlinien die Kanten der späteren Verpackung bilden. Auch diese Packungsmäntel eignen sich daher nur zur Herstellung von Verpackungen mit rechteckigen Querschnittsflächen. Zudem ist auch die Gestaltungsfreiheit der im Bereich der bereits verschlossenen Quernaht entstehenden Giebel- oder Bodenfläche stark eingeschränkt. Besonders nachteilig sind die hohen Umformkräfte, die zum Aufklappen und Umformen des Packungsmantels ("Sleeve") zu einer einseitig offenen Packung erforderlich sind (dieser Zwischenzustand wird auch als "Becher" bezeichnet). Die hohen Umformkräfte führen zu einer erheblichen Belastung der bereits versiegelten Nähte, so dass eine Flüssigkeits- und/oder Gasdichtigkeit nicht mehr mit ausreichender Sicherheit gegeben ist.

Ein weiterer Packungsmantel und eine daraus hergestellte Verpackung werden in der WO 97/32787 A2 beschrieben. Auch bei diesem Packungsmantel sind jedoch im Bereich der Mantelfläche zahlreiche Faltlinien vorgesehen, von denen einige die späteren Kanten der daraus hergestellten Verpackung bilden. Auch diese Packungsmäntel eignen sich daher nur für die Herstellung von Verpackungen mit eckigen Querschnittsflächen. Ein weiterer Nachteil liegt darin, dass der Packungsmantel nicht nur im Bereich der Rückseite durch eine Längsnaht verschlossen ist, sondern auch im Bereich des Bodens durch eine Quernaht bereits verschlossen ist. Dies führt zu einer beschränkten Gestaltungsfreiheit des Bodens. Besonders nachteilig sind auch hier die hohen Umformkräfte, die zum Aufklappen und Umformen des Packungsmantels ("Sleeve") zu einer einseitig offenen Packung erforderlich sind. Die hohen Umformkräfte führen zu einer erheblichen Belastung der bereits versiegelten Nähte, so dass eine Flüssigkeits- und/oder Gasdichtigkeit nicht mehr mit ausreichender Sicherheit gegeben ist. Nachteilig ist zudem die Einschränkung, dass nur eine Bodenvariante (unter den Boden geklappte Ohren) möglich ist, während eine andere Bodenvariante (nach innen gerichtete Ohren oberhalb des Bodens) ausscheidet.

Aus dem Stand der Technik ist zudem die DE 20 2004 010 230 U1 bekannt, welche eine Faltschachtel offenbart.

Vor diesem Hintergrund liegt der Erfindung die Aufgabe zugrunde, den eingangs beschriebenen und zuvor näher erläuterten Packungsmantel derart auszugestalten, dass die Herstellung von Verpackungen - insbesondere flüssigkeitsdichten Verpackungen - mit komplexer Geometrie ermöglicht wird.

Diese Aufgabe wird bei einem Packungsmantel nach dem Oberbegriff von Patentanspruch 1 dadurch gelöst, dass das Verbundmaterial wenigstens eine Schicht aus Papier oder Pappe aufweist, die an der innerhalb des Packungsmantels verlaufenden Kante der Längsnaht abgedeckt ist und dass die Faltlinien sich nicht schneiden, sondern einen Mindestabstand im Bereich zwischen 0,1 mm und 2,0 mm zueinander einhalten.

Der erfindungsgemäße Packungsmantel besteht aus einem Verbundmaterial und dient zur Herstellung einer Verpackung. Insbesondere kann der Packungsmantel aus einem Verbund aus mehreren dünnen Lagen aus Papier, Pappe, Kunststoff oder Metall, insbesondere Aluminium bestehen. Vorzugsweise ist der Packungsmantel einteilig. Der Packungsmantel umfasst eine vordere Fläche, eine hintere Fläche, zwei Seitenflächen sowie Bodenflächen und Giebelflächen, die auf gegenüberliegenden Seiten der beiden Seitenflächen, der vorderen Fläche und der hinteren Fläche angeordnet sind. Vorzugsweise sind die Giebelflächen - bei einer stehenden Verpackung - oberhalb der beiden Seitenflächen, der vorderen Fläche und der hinteren Fläche angeordnet und die Bodenflächen sind unterhalb der beiden Seitenflächen, der vorderen Fläche und der hinteren Fläche angeordnet. Die Bezeichnung der Flächen orientiert sich an den Flächen der aus dem Packungsmantel herzustellenden Verpackung. Der Packungsmantel umfasst weiterhin eine Längsnaht, die zwei Kanten des Verbundmaterials zu einem umlaufenden Packungsmantel verbindet. Durch die Längsnaht kann aus einem flachen - meist rechteckigen - Zuschnitt ein in Umfangsrichtung geschlossener, umlaufender Packungsmantel hergestellt werden. Die Längsnaht kann beispielsweise durch Verkleben und/oder Verschweißen erzeugt werden. Aufgrund der Längsnaht werden derartige Packungsmäntel auch als längsnahtgesiegelte Packungsmäntel bezeichnet. Der Packungsmantel weist zudem mehrere Faltlinien auf. Faltlinien sollen das Falten des Packungsmantels erleichtern und teilen den Packungsmantel in mehrere Flächen auf. Faltlinien können durch Materialschwächungen erzeugt werden. Da die Verpackungen flüssigkeitsdicht sein sollen, werden als Materialschwächungen keine Perforationen, sondern so genannte "Rillungen" verwendet. Rillungen sind linienförmige Materialverdrängungen, die mit Drückwerkzeugen in das Verbundmaterial eingeprägt werden.

Es ist vorgesehen, dass die beiden Seitenflächen jeweils eine durch die Seitenfläche verlaufende Scheinfaltlinie aufweisen, und dass der Packungsmantel ausschließlich entlang von beiden Scheinfaltlinien gefaltet ist. Dieser Gestaltung liegt die Idee zugrunde, den Packungsmantel nicht entlang von Faltlinien zu falten, die die Kanten der aus dem Packungsmantel hergestellten Verpackung bilden. Der Packungsmantel soll also nicht an den Faltlinien gefaltet werden, die die vordere Fläche, die hintere Fläche und die beiden Seitenflächen voneinander abgrenzen. Stattdessen soll der Packungsmantel ausschließlich entlang von zusätzlich vorgesehenen Faltlinien ("Scheinfaltlinien") gefaltet werden, die später keine Kante der Verpackung bilden, sondern zwischen den Kanten der Verpackung (hier: in den Seitenflächen) angeordnet sind. Eine Faltung entlang der Scheinfaltlinien erfolgt daher nur bei dem Packungsmantel, nicht jedoch bei der daraus hergestellten Verpackung. Dies erlaubt eine freie Gestaltung der Verpackungsgeometrie und erlaubt insbesondere die Herstellung von Verpackungen mit in vertikaler Richtung wenigstens abschnittsweise nicht-eckigen Verpackungsquerschnitten.

Erfindungsgemäß ist vorgesehen, dass der Packungsmantel sowohl im Bereich der Bodenflächen als auch im Bereich der Giebelflächen offen ist. Mit anderen Worten weist der Packungsmantel zwei Öffnungen auf, wobei eine Öffnung im Bereich der Bodenfläche angeordnet ist und wobei die andere Öffnung im Bereich der Giebelfläche angeordnet ist. Durch die beiden gegenüberliegenden Öffnungen kann der Packungsmantel besonders einfach aufgefaltet werden, wodurch die Form einer Röhre bzw. einer Ärmels ("sleeve") entsteht. Ein Vorteil von beidseitig geöffneten Packungsmäntel liegt - etwa im Gegensatz zur WO 97/32787 A2 - in der variablen Gestaltungsmöglichkeit des Bodens. Insbesondere kann die Ausrichtung der "Ohren" frei gewählt werden. Eine Bodenvariante kann beispielsweise vorsehen, dass die Ohren unter die Rechtecksflächen des Bodens geklappt und dort befestigt werden. Eine andere Bodenvariante kann hingegen nach innen gerichtete Ohren vorsehen, die oberhalb der später eingeklappten Rechtecksflächen des Bodens angeordnet sind. Ein weiterer Vorteil von beidseitig geöffneten Packungsmänteln liegt darin, dass ihre Innenflächen einfacher sterilisiert werden können, da ein sterilisierendes Medium, etwa ein H₂O₂-haltiges Gasgemisch einfach in vorzugsweise laminarem Strom durch den beidseitig offenen Packungsmantel zur Keimreduktion gefördert werden kann.

Nach einer Ausgestaltung des Packungsmantels ist vorgesehen, dass wenigstens eine der Faltlinien wenigstens abschnittsweise ungerade verläuft und insbesondere gekrümmt oder geknickt ist. Diese Gestaltung kann insbesondere diejenigen Faltlinien betreffen, die die Bodenflächen mit den Giebelflächen verbinden, die also durch die vordere Fläche, die hintere Fläche oder die Seitenflächen des Packungsmantels verlaufen. Es kann vorgesehen sein, dass wenigstens eine der Faltlinien durchgehend ungerade verläuft und insbesondere durchgehend gekrümmt ist. Es kann zudem vorgesehen sein, dass nicht nur eine Faltlinie, sondern alle Faltlinien, die die Bodenflächen mit den Giebelflächen verbinden, wenigstens abschnittsweise ungerade verlaufen und insbesondere gekrümmt oder geknickt sind.

Bei einem erfindungsgemäßen Packungsmantel ist zudem vorgesehen, dass die Faltlinien sich nicht schneiden, sondern einen Mindestabstand im Bereich zwischen 0,1 mm und 2,0 mm zueinander einhalten. Mit anderen Worten sollen die Faltlinien sich zwar annähern, aber keine echten Schnittpunkte bilden. Das Schneiden von zwei aufeinander zulaufenden Faltlinien kann beispielsweise dadurch verhindert werden, dass wenigstens eine dieser Faltlinien im Bereich des eigentlichen Schnittpunktes unterbrochen wird. Dieser Gestaltung liegt die Idee zugrunde, dass sich schneidende Faltlinien eine besonders hohe Belastung des Packungsmantels darstellen, die bei der Faltung zu Beschädigungen des Packungsmantels führen kann. Dies kann wiederum zu undichten Verpackungen führen. Indem ein "Sicherheitsabstand" zwischen Faltlinien eingehalten wird, können diese Belastungen verringert werden.

Gemäß einer weiteren Ausgestaltung des Packungsmantels ist vorgesehen, dass die Bodenflächen Eckpunkte der Verpackung aufweisen und dass die Giebelflächen Eckpunkte der Verpackung aufweisen und dass zwischen wenigstens einem Eckpunkt der Bodenflächen und dem ihm zugeordneten Eckpunkt der Giebelflächen keine durchgehend gerade Faltlinie vorgesehen ist. Die Bezeichnung der Eckpunkte orientiert sich an den Eckpunkten der aus dem Packungsmantel herzustellenden Verpackung. Die Eckpunkte können beispielsweise auf der Faltlinie zwischen einer Bodenfläche bzw. Giebelfläche und der daran angrenzenden "Mantelfläche" (also der vorderen Fläche, der hinteren Fläche oder einer Seitenfläche) liegen. Die Eckpunkte können zudem auf der Faltlinie zwischen einer Dreiecksfläche und einer Rechtecksfläche einer Bodenfläche bzw. Giebelfläche liegen. Jedem Eckpunkt einer Bodenfläche ist ein entsprechender Eckpunkt einer Giebelfläche zugeordnet, bei dem es sich um denjenigen Eckpunkt handelt, der bei stehender Verpackung oberhalb dieses Eckpunktes angeordnet ist. Durch zwei einander zugeordnete Eckpunkte verläuft eine Eckachse, die bei einer herkömmlichen quaderförmigen Verpackung einer vertikalen Verpackungskante entsprechen würde. Gemäß dieser Ausgestaltung soll zwischen wenigstens einem Paar einander zugeordneter Eckpunkte - also auf wenigstens einer Eckachse - keine durchgehend gerade Faltlinie angeordnet sein. Vorzugsweise sind bei mehreren oder allen Paaren einander zugeordneter Eckpunkte - also auf mehreren oder allen Eckachsen - keine durchgehend geraden Faltlinien angeordnet. Zudem kann vorgesehen sein, dass zwischen wenigstens einem Paar einander zugeordneter Eckpunkte - also auf wenigstens einer Eckachse - überhaupt keine Faltlinie angeordnet ist. Schließlich kann vorgesehen sein, dass bei mehreren oder allen Paaren einander zugeordneter Eckpunkte - also auf mehreren oder allen Eckachsen - überhaupt keine Faltlinien angeordnet sind. Auf den Eckachsen sollen also möglichst keine geraden - oder jedenfalls keine durchgehenden geraden - Faltlinien angeordnet sein. Durch diese Ausgestaltungen werden eckige Verpackungskanten vermieden und Gestaltungen mit komplexerer Geometrie ermöglicht.

Nach einer Ausgestaltung des Packungsmantels ist vorgesehen, dass der Packungsmantel entlang von beiden Scheinfaltlinien um einen Winkel von jeweils etwa 180° flach gefaltet ist. Die Faltung um einen Winkel von etwa 180° ermöglicht besonders flache Packungsmäntel. Dies erlaubt eine platzsparende Stapelung von Packungsmänteln, was beispielsweise den Transport erleichtert. Auf diese Weise können die Packungsmäntel an einem anderen Ort hergestellt werden als die Befüllung und Herstellung der Verpackungen erfolgt. Vorzugsweise ist der Packungsmantel entlang von beiden Scheinfaltlinien nach außen gefaltet. Dadurch sind die Packungsmäntel besonders eng zueinander stapelbar.

Eine weitere Ausbildung des Packungsmantels sieht vor, dass die beiden Scheinfaltlinien parallel zueinander verlaufen. Vorzugsweise sind die beiden Scheinfaltlinien gerade und verlaufen parallel zueinander. Die parallele Anordnung hat den Vorteil, dass die Scheinfaltlinien besonders einfach in das Verbundmaterial eingeprägt werden können.

Nach einer weiteren Ausgestaltung des Packungsmantels ist vorgesehen, dass die beiden Seitenflächen, die vordere Fläche und die hintere Fläche von Faltlinien begrenzt sind. Die genannten Flächen können nach oben (angrenzend an die Giebelfläche) und/oder nach unten (angrenzend an die Bodenfläche) von Faltlinien begrenzt sein. Auch eine seitliche Begrenzung der genannten Flächen durch Faltlinien kann vorgesehen sein. Eine weitere Ausbildung des Packungsmantels zeichnet sich aus durch wenigstens eine Freiformfläche, die zwischen zwei benachbarten Flächen aus der Gruppe der beiden Seitenflächen, der vorderen Fläche und der hinteren Fläche angeordnet ist. Unter einer Freiformfläche wird eine Fläche mit einer komplexen Geometrie verstanden. Dies sind insbesondere Flächen, die nicht ausschließlich in einer Ebene liegen, sondern gekrümmt sind. Die Freiformfläche kann nur einen Teil der Grenze zwischen zwei benachbarten Flächen aus der Gruppe der beiden Seitenflächen, der vorderen Fläche und der hinteren Fläche abdecken oder die benachbarten Flächen vollständig voneinander trennen.

Zu dieser Ausbildung des Packungsmantels wird weiter vorgeschlagen, dass die wenigstens eine Freiformfläche von Faltlinien begrenzt ist. Die Freiformfläche kann nach oben (angrenzend an die Giebelfläche) und/oder nach unten (angrenzend an die Bodenfläche) von Faltlinien begrenzt sein. Auch eine seitliche Begrenzung der Freiformfläche durch Faltlinien kann vorgesehen sein.

Hierzu wird vorgeschlagen, dass die Giebelfläche angrenzend an die hintere Fläche eine geringere Länge aufweist als die Länge der Giebelfläche angrenzend an die vordere Fläche. Diese Gestaltung führt dazu, dass die vordere Fläche der Verpackung eine geringere Höhe aufweist als die hintere Fläche der Verpackung. Die Verpackung weist also eine schräg abfallende Oberseite auf. Hierdurch kann das Ausgießverhalten der Verpackung verbessert werden. Zudem kann eine Fläche im Bereich der Oberseite der Verpackung verhältnismäßig groß gestaltet werden und bietet so Platz zur Anbringung einer Öffnungshilfe ("cap").

Zu diesen Ausgestaltungen des Packungsmantels wird weiter vorgeschlagen, dass die Bodenflächen und die Giebelflächen jeweils zwei Rechtecksflächen und sechs Dreiecksflächen umfassen. Vorzugsweise sind auch die Rechtecksflächen und die Dreiecksflächen von Faltlinien umgeben bzw. begrenzt. Die Rechtecksflächen dienen der Faltung des Bodens und des Giebels der Verpackung. Die Dreiecksflächen dienen dazu, dass überschüssige Verbundmaterial zu abstehenden "Ohren" zu falten, die anschließend an die Verpackung angelegt werden.

Hierzu wird weiter vorgeschlagen, dass die Scheinfaltlinien durch den Berührungspunkt von drei benachbarten Dreiecksflächen der Bodenfläche und durch den Berührungspunkt von drei benachbarten Dreiecksflächen der Giebelflächen verlaufen. Diese Anordnung der Scheinfaltlinien hat den Vorteil, dass die Scheinfaltlinien an einer Stelle durch die Bodenfläche und die Giebelfläche verlaufen, an denen diese Flächen ohnehin gefaltet werden müssen, beispielsweise zur Bildung von "Ohren". Die Faltung des Packungsmantels entlang der Scheinfaltlinien führt daher bereits zu einer "Vorfaltung" der mittig durch die "Ohren" verlaufenden Faltlinie. Ein weiterer Vorteil der mittigen Anordnung der Scheinfaltlinien in den Seitenflächen liegt darin, dass die Scheinfaltlinien den Raum für die Gestaltung der Kanten der Verpackung möglichst wenig begrenzen. Es kann vorgesehen sein, dass zwei der Dreiecksflächen der Bodenfläche und/oder der Giebelfläche etwa den gleichen Flächeninhalt aufweisen. Alternativ kann vorgesehen sein, dass alle drei Dreiecksflächen der Bodenfläche und/oder der Giebelfläche unterschiedliche Flächeninhalte aufweisen.

Eine weitere Ausbildung des Packungsmantels sieht vor, dass die Faltlinien und/oder die Scheinfaltlinien von der Innenseite zur Außenseite des Packungsmantels und/oder von der Außenseite zur Innenseite des Packungsmantels geprägt sind. Je nach Lage und Faltrichtung einer Faltlinie kann die eine Veränderung der Prägerichtung zu besseren Faltergebnissen führen. Zudem können auf diese Weise gleichzeitig bzw. in einem Produktionsschritt mit den Faltlinien auch - nicht zur Faltung vorgesehene - nach außen gerichtete und hervorstehende Linien erzeugt werden, die beispielsweise dazu dienen, die Verpackung besser greifen und sicherer halten zu können. Bei einem Packungsmantel kann eine Kombination aus beiden Prägerichtungen vorgesehen sein.

In weiterer Ausgestaltung des Packungsmantels wird vorgeschlagen, dass das Verbundmaterial des Packungsmantels eine Stärke im Bereich zwischen 150 g/m² und 400 g/m², insbesondere zwischen 200 g/m² und 250 g/m² aufweist. Eine Stärke in diesem Bereich hat sich als guter Kompromiss zwischen geringen Kosten und geringem Gewicht (möglichst dünnes Verbundmaterial) und ausreichenden mechanischen Eigenschaften (möglichst dickes Verbundmaterial) erwiesen.

Nach einer weiteren Ausbildung des Packungsmantels ist schließlich vorgesehen, dass die Längsnaht zwei Teilbereiche der hinteren Fläche miteinander verbindet. Nach dieser Ausbildung soll die Längsnaht also in der hinteren Fläche angeordnet sein und diese in zwei Teilbereiche aufteilen. Dies hat den Vorteil, dass die vordere Fläche - der der Kunde die meiste Aufmerksamkeit schenkt - nahtlos ausgeführt werden kann. Ein weiterer Vorteil der Anordnung der Längsnaht in der hinteren Fläche liegt darin, dass die in den Seitenflächen angeordneten Scheinfaltlinien nicht mit der Längsnaht kollidieren. Die beiden Teilbereiche der hinteren Fläche können gleich breit (mittige Längsnaht) oder unterschiedlich breit (seitlich versetzte Längsnaht) ausgebildet sein.

Bei einem erfindungsgemäßen Packungsmantel ist zudem vorgesehen, dass das Verbundmaterial wenigstens eine Schicht aus Papier oder Pappe aufweist, die an der innerhalb des Packungsmantels verlaufenden Kante der Längsnaht abgedeckt ist. Die Abdeckung der Papierschicht bzw. Pappschicht hat den Zweck, einen Kontakt zwischen dem Inhalt der Verpackung und dieser Schicht zu vermeiden. Dies dient einerseits dazu, ein Austreten von Flüssigkeit durch die - nicht flüssigkeitsdichte - Papierschicht bzw. Pappschicht zu vermeiden und andererseits dazu, den Inhalt der Verpackung von Verunreinigungen durch die Papierschicht bzw. Pappschicht zu schützen (z.B. Fasern des Zellstoffs).

Zu dieser Ausgestaltung wird weiter vorgeschlagen, dass die Schicht aus Papier oder Pappe durch einen Dichtstreifen und/oder durch Umlegen des Verbundmaterials im Bereich der Längsnaht abgedeckt ist. Eine Möglichkeit der Abdeckung ist die Befestigung eines separaten Dichtstreifens. Der Dichtstreifen kann beispielsweise aus demselben Material hergestellt sein wie die innerste Lage des Verbundmaterials und mit dieser Lager verklebt oder verschweißt werden. Eine andere Möglichkeit der Abdeckung besteht darin, das Verbundmaterial im Bereich der Längsnaht umzulegen bzw. umzuklappen. Auf diese Weise treten an der innerhalb des Packungsmantels verlaufenden Kante der Längsnaht nicht mehr alle Lagen, sondern nur noch die innerste Lage des Verbundmaterials zum Vorschein. Die innerste Lage muss jedoch ohnehin aus einem Material hergestellt sein, dass für den Kontakt mit dem Inhalt der Verpackung geeignet ist.

Bei einer weiteren Ausbildung des Packungsmantels ist das Verbundmaterial im Bereich der Längsnaht geschält. Unter einem "geschälten" Verbundmaterial wird ein Verbundmaterial verstanden, das in dem geschälten Bereich weniger Lagen aufweist als in den übrigen Bereichen. Die Schälung hat insbesondere im Bereich von Überlappungen mehrerer Materiallagen den Vorteil einer weniger starken Dickenzunahme. Besonders vorteilhaft ist daher der Einsatz von geschältem Verbundmaterial, wenn das Verbundmaterial umgelegt oder umgeklappt wird - beispielsweise im Bereich der Längsnaht.

Der Packungsmantel kann nach einer weiteren Ausgestaltung ergänzt werden durch eine Materialschwächung, insbesondere ein überbeschichtetes Loch, in einer der Giebelflächen zur Befestigung eines Ausgießelements. Die Materialschwächung dient dazu, das spätere Anbringen eines Ausgießelements zu erleichtern. Hierzu wird beispielsweise zunächst ein durchgehendes Loch in das Verbundmaterial gestanzt, welches anschließend überbeschichtet wird. Die Überbeschichtung kann beispielsweise mit einer Kunststofffolie erfolgen und dient dazu, die Verpackung bis zur Applikation des Ausgießelements abzudichten.

Die zuvor beschriebene Aufgabe wird auch gelöst durch eine Verpackung aus einem Verbundmaterial, wobei die Verpackung entlang der Faltlinien gefaltet ist, wobei die Verpackung im Bereich der Bodenfläche und im Bereich der Giebelfläche verschlossen ist, und wobei die an die Scheinfaltlinien angrenzenden Teilbereiche beider Seitenwände jeweils in einem Winkelbereich zwischen 160° und 200°, insbesondere zwischen 170° und 190° zueinander angeordnet sind. Die Verpackung ist dadurch gekennzeichnet, dass sie aus einem Packungsmantel nach einem der Ansprüche 1 bis 19 hergestellt ist.

Da die Verpackung aus einem der zuvor beschriebenen Packungsmäntel hergestellt wird, treten viele Eigenschaften und Vorteile des Packungsmantels auch bei der Verpackung auf. Ein besonderer Vorteil liegt darin, dass die Verpackung im Bereich ihrer Mantelfläche an ihren Seiten keine eckige Kanten aufweist, obgleich sie aus einem Packungsmantel hergestellt wurde, der an zwei Stellen gefaltet ist und somit zwei Faltkanten aufweist. Bevorzugt weist die Verpackung entlang von wenigstens einer vertikalen Eckachse keine durchgehend gerade Faltkante auf; ganz bevorzugt weist die Verpackung an mehreren oder allen vertikalen Eckachsen keine durchgehend geraden Faltkanten auf. Dies wird dadurch erreicht, dass der Packungsmantel bei der Herstellung der Verpackung entlang der beiden Scheinfaltlinien "zurückgefaltet" wird, sodass die an die Scheinfaltlinien angrenzenden Teilbereiche beider Seitenwände jeweils annähernd in derselben Ebene angeordnet sind. Die Scheinfaltlinien bilden also nicht die Kanten der Verpackung, sondern liegen - kaum sichtbar - in zwei fast ebenen Außenflächen der Verpackung, nämlich in den beiden Seitenflächen. Die Verpackung weist vorzugsweise ein Volumen im Bereich zwischen 50 ml und 4000 ml, insbesondere zwischen 80 ml und 1000 ml, ganz insbesondere zwischen 200 ml und 350 ml auf. Bevorzugt ist die Verpackung einteilig. Insbesondere ist vorzugsweise jedenfalls der aus dem Verbundmaterial hergestellte Teil der Verpackung einteilig. Dieser Teil der Verpackung kann durch weitere Elemente, beispielsweise durch ein Ausgießelement (z.B. ein Klapp- oder Drehverschluss aus Kunststoff) oder eine Trinkhilfe (z.B. einen Strohhalm) ergänzt werden. Ein weiterer Vorteil der Herstellung aus den zuvor beschriebenen Verpackungsmänteln liegt darin, dass die Gestaltung des Bodens variiert werden kann, da die Packungsmäntel im Bereich der Bodenflächen noch nicht verschweißt sind.

Nach einer Ausgestaltung der Verpackung ist vorgesehen, dass die vordere Fläche und die hintere Fläche etwa in parallel zueinander liegenden Ebenen angeordnet sind. Alternativ oder zusätzlich hierzu ist vorgesehen, dass die beiden Seitenflächen etwa in parallel zueinander liegenden Ebenen angeordnet sind. Diese Anordnung der vier großen Flächen erlaubt eine kompakte Zusammenfassung mehrerer Verpackungen zu Transport- oder Lagerzwecken. Gleichwohl führt diese Anordnung der Flächen nicht zwingend zu einer rechteckigen Querschnittsfläche, da die Übergänge der Flächen nicht eckig bzw. winklig erfolgen, sondern beispielsweise durch gekrümmte Flächen, insbesondere durch Freiformflächen realisiert werden können.

Eine weitere Ausbildung der Verpackung zeichnet sich aus durch Ohren, die im unteren Bereich der Verpackung an die Bodenflächen angelegt sind. Alternativ oder zusätzlich zeichnet sich die Verpackung aus durch Ohren, die im oberen Bereich der Verpackung an die Seitenflächen angelegt sind. Im unteren Bereich der Verpackung können die Ohren auf unterschiedliche Weise an die Bodenfläche angelegt werden: Eine Bodenvariante sieht vor, dass die Ohren unter die Rechtecksflächen des Bodens geklappt und dort befestigt werden. Eine andere Bodenvariante sieht hingegen nach innen gerichtete Ohren vor, die oberhalb der später eingeklappten Rechtecksflächen des Bodens angeordnet sind. Die erste Variante hat den Vorteil, dass die Ohren durch das Eigengewicht der gefüllten Verpackung sicher an die Verpackung gedrückt werden, die zweite Variante bietet hingegen eine besonders glatte Bodenfläche. Zudem kann die Verpackung sicher gegriffen werden, ohne die Ohren zu berühren. Die Anordnung der oberen Ohren an den Seitenflächen hat den Vorteil, dass auf der Oberseite der Verpackung ein Ausgießelement angeordnet werden kann.

Die eingangs beschriebene Aufgabe wird auch gelöst durch ein Verfahren zur Herstellung einer Verpackung aus einem Packungsmantel aus einem Verbundmaterial. Das Verfahren umfasst die folgenden Schritte: a) Bereitstellen eines Packungsmantels nach einem der Ansprüche 1 bis 19, b) Auffalten des Packungsmantels entlang der Faltlinien zwischen den Seitenflächen, der vorderen Fläche und der hinteren Fläche, c) Zurückfalten der beiden Seitenflächen des Packungsmantels entlang von beiden Scheinfaltlinien, und d) Versiegeln des Packungsmantels im Bereich der Bodenflächen. Das Verfahren ist dadurch gekennzeichnet, dass Schritt d) sowohl nach Schritt b) als auch nach Schritt c) durchgeführt wird. Das Verfahren kann ergänzt werden durch den folgenden Schritt: e) Bildung von Freiformflächen durch Verformung des Verbundmaterials. Schritt e) kann vor dem Befüllen der Verpackung und/oder nach dem Befüllen und Verschließen der Verpackung erfolgen.

Wie bereits zuvor beschrieben wurde, liegt auch dem Verfahren die Idee zugrunde, eine Verpackung aus einem Packungsmantel herzustellen, dessen Faltkanten keine Kanten der daraus hergestellten Verpackung bilden. Dies wird dadurch ermöglicht, dass der entlang von Scheinfaltlinien gefaltete Packungsmantel "zurückgefaltet" wird, wobei die Faltung entlang der Scheinfaltlinien rückgängig gemacht wird. Die in dem Packungsmantel vorgesehenen Scheinfaltlinien bilden also keine Kante der Verpackung; sie sind stattdessen zwischen den Kanten der Verpackung (hier: in den Seitenflächen) angeordnet. Der Packungsmantel wird natürlich im Bereich von anderen Faltlinien gefaltet, die jedoch nicht zwingend zu eckigen Faltkanten umgeformt werden müssen und deren Verlauf auch gekrümmt sein kann. Dies erlaubt die Herstellung von Verpackungen mit komplexer Geometrie. Indem der Packungsmantel im Bereich der Bodenflächen erst verschlossen wird, nachdem der Mantel aufgefaltet und zurückgefaltet wurde, können zudem unterschiedliche Bodengestaltungen erreicht werden.

Eine Ausgestaltung des Verfahrens sieht vor, dass die Schritte b) und c) gleichzeitig durchgeführt werden. Die Schritte b) und c) können lediglich phasenweise oder auch durchgehend gleichzeitig durchgeführt werden. Eine gleichzeitige Ausführung von "Auffaltung" und "Zurückfaltung" hat den Vorteil, dass beide Faltvorgänge in derselben Anlage und ggf. durch dasselbe Werkzeug durchgeführt werden können. Dies kann beispielsweise dadurch erfolgen, dass die beiden durch die Scheinfaltlinien gebildeten Faltkanten der Packungsmäntel aufeinander zubewegt werden, wobei sich der Packungsmantel öffnet. Die Faltung entlang der vertikal verlaufenden Faltlinien zwischen den Seitenflächen, der vorderen Fläche und der hinteren Fläche kann dadurch sichergestellt werden, dass die Öffnung des Packungsmantels in einer - vorzugsweise mehrteiligen - Form erfolgt, deren innere Kontur der äußeren Kontur der Verpackung entspricht ("Formpresse").

Nach einer weiteren Ausbildung des Verfahrens ist schließlich vorgesehen, dass die an die Scheinfaltlinien angrenzenden Teilbereiche einer Seitenwand der Verpackung nach dem Zurückfalten wieder jeweils in einem Winkelbereich zwischen 160° und 200°, insbesondere zwischen 170° und 190° zueinander liegen. Die Seitenflächen sollen also so weit entlang der Scheinfaltlinien zurückgefaltet werden, dass die Seitenflächen nahezu ebene Seitenwände bilden.

Die Erfindung wird nachfolgend anhand einer lediglich ein bevorzugtes Ausführungsbeispiel darstellenden Zeichnung näher erläutert. In der Zeichnung zeigen:
- Fig. 1A:: einen aus dem Stand der Technik bekannten Zuschnitt zum Falten eines Packungsmantels,
- Fig. 1B:: einen aus dem Stand der Technik bekannten Packungsmantel, der aus dem in Fig. 1A gezeigten Zuschnitt gebildet ist, im flach gefalteten Zustand,
- Fig. 1C:: den Packungsmantel aus Fig. 1B im aufgefalteten Zustand,
- Fig. 1D:: den Packungsmantel aus Fig. 1C mit vorgefalteten Boden- und Giebelflächen,
- Fig. 1E:: eine aus dem Stand der Technik bekannte Verpackung, die aus dem in Fig. 1A gezeigten Zuschnitt gebildet ist, nach dem Verschweißen,
- Fig. 1F:: die Verpackung aus Fig. 1E mit angelegten Ohren,
- Fig. 2A:: einen Zuschnitt zur Herstellung einer ersten Ausgestaltung eines erfindungsgemäßen Packungsmantels,
- Fig. 2B:: eine erste Ausgestaltung eines erfindungsgemäßen Packungsmantels, der aus dem in Fig. 2A gezeigten Zuschnitt gebildet ist, in einer Vorderansicht,
- Fig. 2C:: den Packungsmantel aus Fig. 2B in einer Rückansicht,
- Fig. 2D:: den Packungsmantel aus Fig. 2B und Fig. 2C im aufgefalteten Zustand,
- Fig. 2E:: den Packungsmantel aus Fig. 2D mit vorgefalteten Boden- und Giebelflächen,

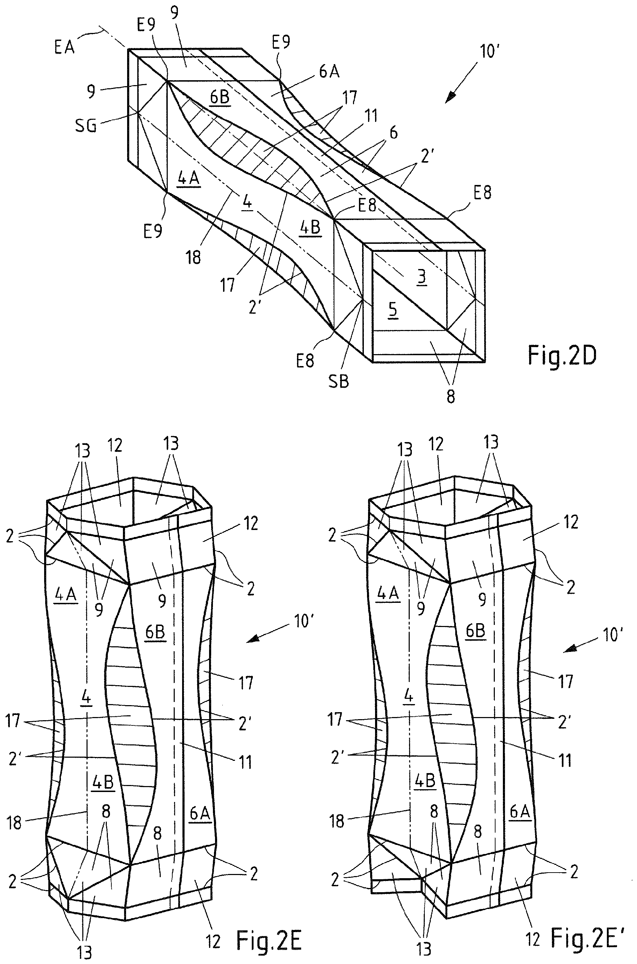

- Fig. 2E':: den Packungsmantel aus Fig. 2D mit vorgefalteten Boden- und Giebelflächen,

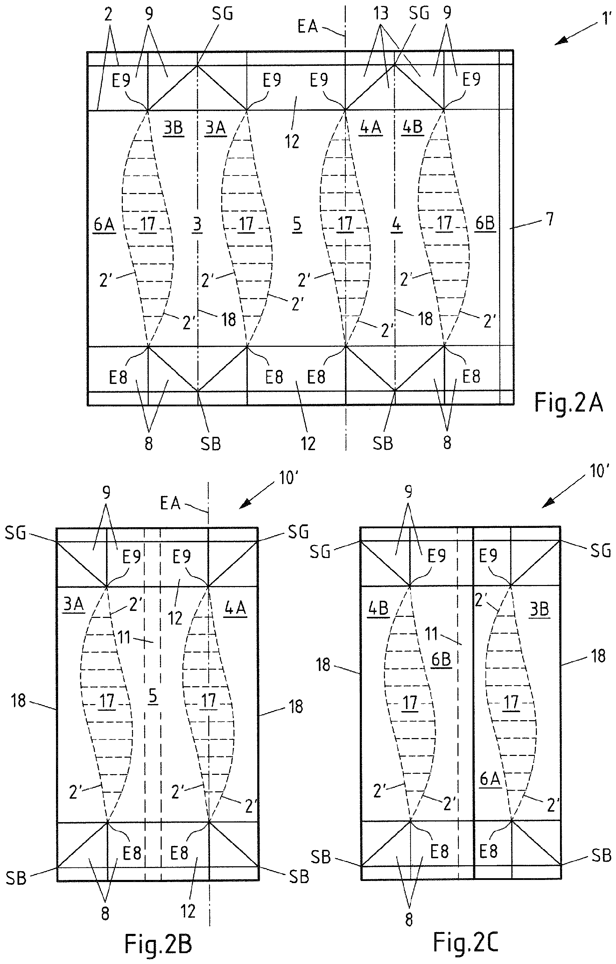

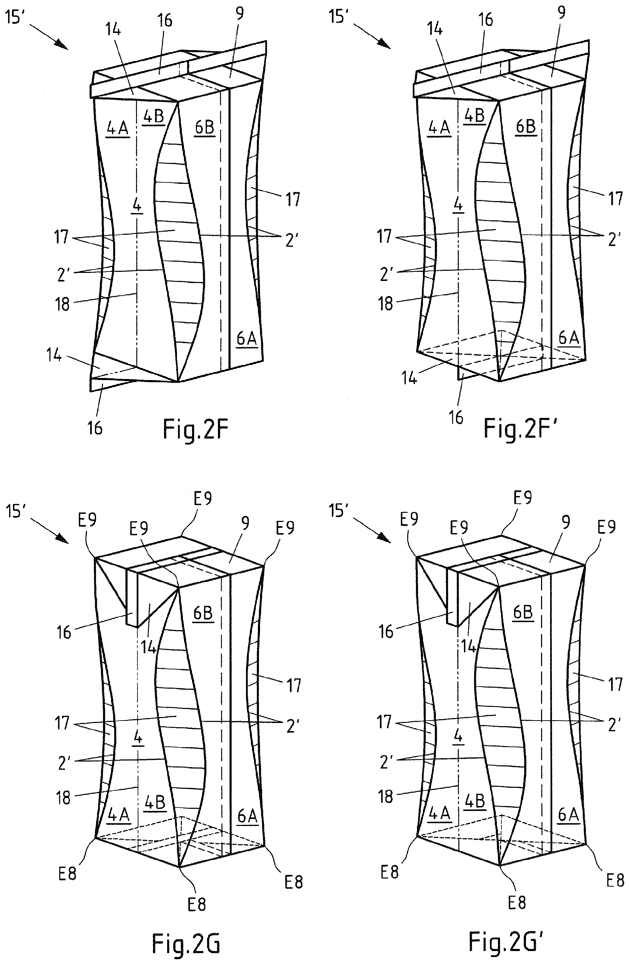

- Fig. 2F:: eine erste Ausgestaltung einer erfindungsgemäßen Verpackung, die aus dem in Fig. 2B gezeigten Packungsmantel gebildet ist, nach dem Verschweißen,
- Fig. 2F':: eine erste Ausgestaltung einer erfindungsgemäßen Verpackung, die aus dem in Fig. 2B gezeigten Packungsmantel gebildet ist, nach dem Verschweißen,
- Fig. 2G:: die Verpackung aus Fig. 2F mit angelegten Ohren,
- Fig. 2G':: die Verpackung aus Fig. 2F' mit angelegter Flossennaht,

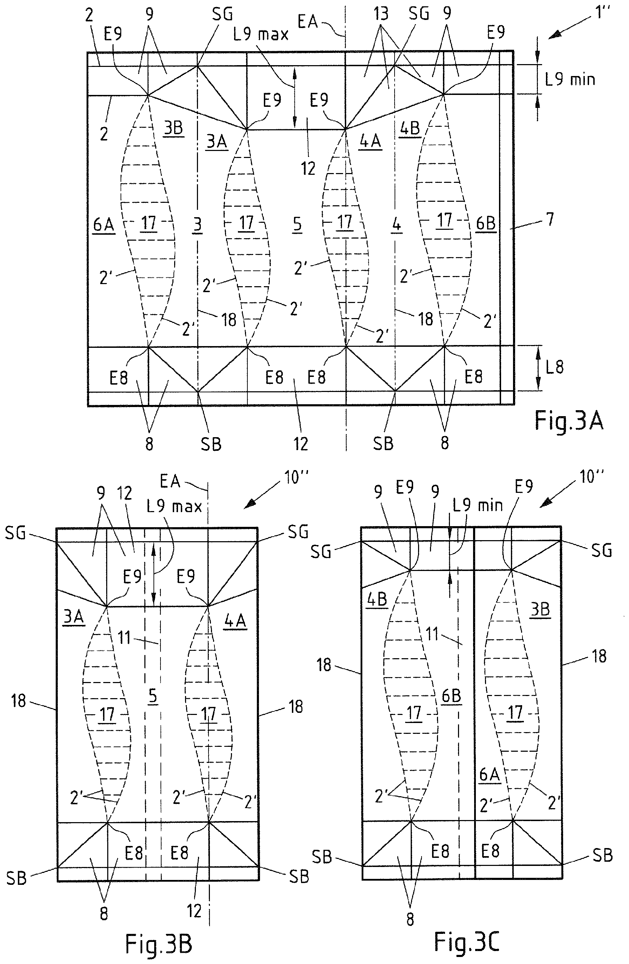

- Fig. 3A:: einen Zuschnitt zur Herstellung einer zweiten Ausgestaltung eines erfindungsgemäßen Packungsmantels,
- Fig. 3B:: eine zweite Ausgestaltung eines erfindungsgemäßen Packungsmantels, der aus dem in Fig. 3A gezeigten Zuschnitt gebildet ist, in einer Vorderansicht,
- Fig. 3C:: den Packungsmantel aus Fig. 3B in einer Rückansicht,

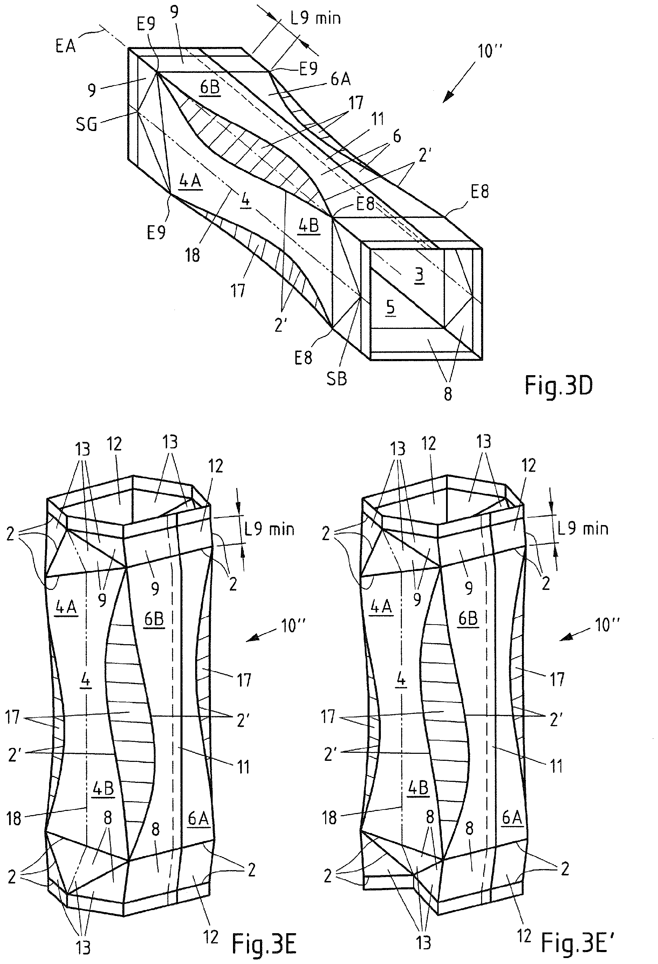

- Fig. 3D:: den Packungsmantel aus Fig. 3B und Fig. 3C im aufgefalteten Zustand,
- Fig. 3E:: den Packungsmantel aus Fig. 3D mit vorgefalteten Boden- und Giebelflächen,
- Fig. 3E':: den Packungsmantel aus Fig. 3D mit vorgefalteten Boden- und Giebelflächen,

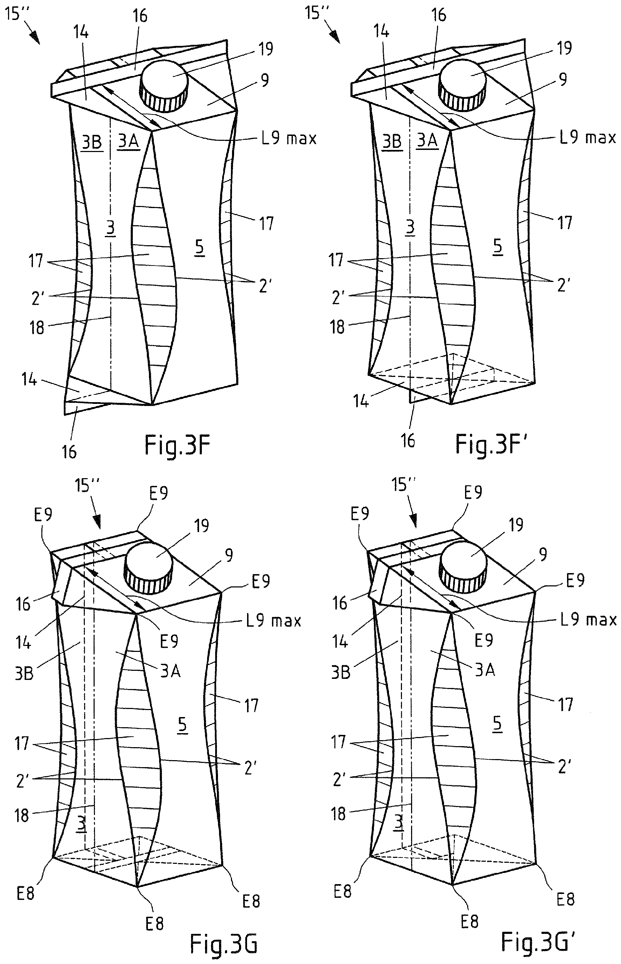

- Fig. 3F:: eine zweite Ausgestaltung einer erfindungsgemäßen Verpackung, die aus dem in Fig. 3B gezeigten Packungsmantel gebildet ist, nach dem Verschweißen,
- Fig. 3F':: eine zweite Ausgestaltung einer erfindungsgemäßen Verpackung, die aus dem in Fig. 3B gezeigten Packungsmantel gebildet ist, nach dem Verschweißen,
- Fig. 3G:: die Verpackung aus Fig. 3F mit angelegten Ohren, und
- Fig. 3G':: die Verpackung aus Fig. 3F' mit angelegter Flossennaht.

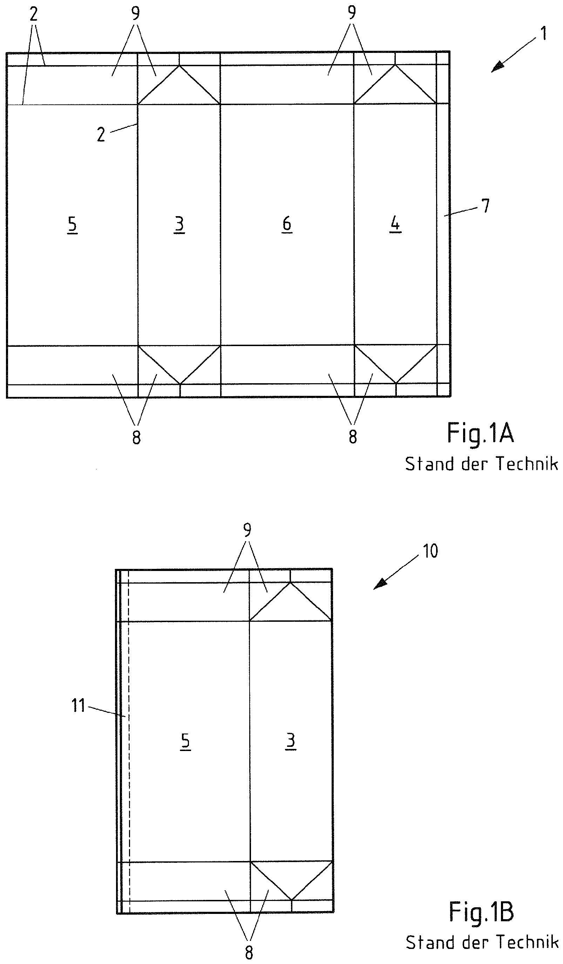

In Fig. 1A ist ein aus dem Stand der Technik bekannter Zuschnitt 1 dargestellt, aus dem ein Packungsmantel gebildet werden kann. Der Zuschnitt 1 kann mehrere Lagen unterschiedlicher Materialien umfassen, beispielsweise Papier, Pappe, Kunststoff oder Metall, insbesondere Aluminium. Der Zuschnitt 1 weist mehrere Faltlinien 2 auf, die das Falten des Zuschnitts 1 erleichtern sollen und den Zuschnitt 1 in mehrere Flächen aufteilen. Der Zuschnitt 1 kann in eine erste Seitenfläche 3, eine zweite Seitenfläche 4, eine vordere Fläche 5, eine hintere Fläche 6, eine Siegelfläche 7, Bodenflächen 8 und Giebelflächen 9 unterteilt werden. Aus dem Zuschnitt 1 kann ein Packungsmantel gebildet werden, indem der Zuschnitt 1 derart gefaltet wird, dass die Siegelfläche 7 mit der vorderen Fläche 5 verbunden, insbesondere verschweißt werden kann.

Fig. 1B zeigt einen aus dem Stand der Technik bekannten Packungsmantel 10 im flach gefalteten Zustand. Die bereits im Zusammenhang mit Fig. 1A beschriebenen Bereiche des Packungsmantels sind in Fig. 1B mit entsprechenden Bezugszeichen versehen. Der Packungsmantel 10 ist aus dem in Fig. 1A gezeigten Zuschnitt 1 gebildet. Hierzu wurde der Zuschnitt 1 derart gefaltet, dass die Siegelfläche 7 und die vordere Fläche 5 überlappend angeordnet sind, so dass die beiden Flächen miteinander flächig verschweißt werden können. Als Ergebnis entsteht eine Längsnaht 11. In Fig. 1B ist der Packungsmantel 10 in einem flach zusammengefalteten Zustand dargestellt. In diesem Zustand liegt eine Seitenfläche 4 (in Fig. 1B verdeckt) unter der vorderen Fläche 5 während die andere Seitenfläche 3 auf der hinteren Fläche 6 (in Fig. 1B verdeckt) liegt. In dem flach zusammengefalteten Zustand können mehrere Packungsmäntel 10 besonders platzsparend gestapelt werden. Daher werden die Packungsmäntel 10 häufig an dem Ort der Herstellung gestapelt und stapelweise zu dem Ort der Befüllung transportiert. Erst dort werden die Packungsmäntel 10 - meistens bereits innerhalb einer Füllmaschine - abgestapelt und aufgefaltet, um mit Inhalten, beispielsweise mit Nahrungsmitteln, befüllt werden zu können. Die Befüllung kann unter aseptischen Bedingungen erfolgen.

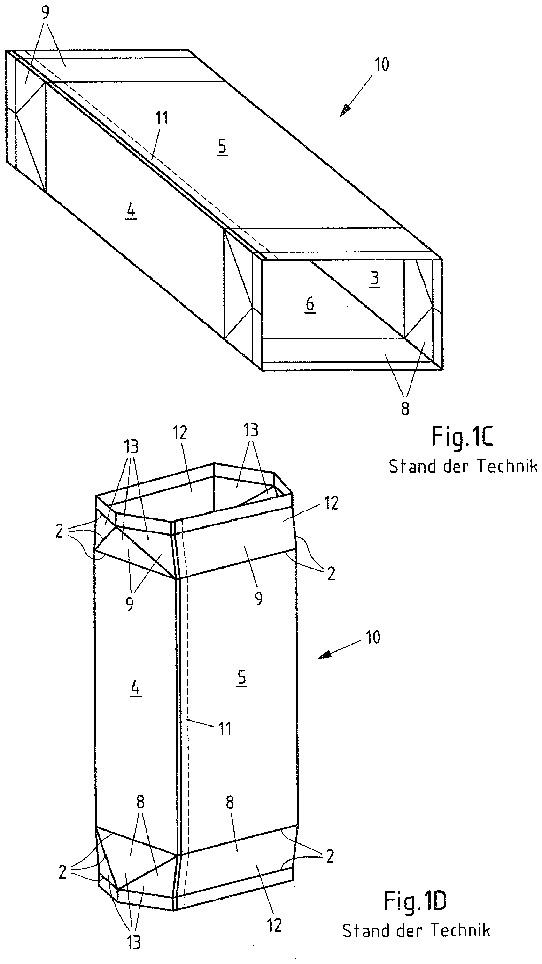

In Fig. 1C ist der Packungsmantel 10 aus Fig. 1B im aufgefalteten Zustand dargestellt. Auch hier sind die bereits im Zusammenhang mit Fig. 1A oder Fig. 1B beschriebenen Bereiche des Packungsmantels 10 mit entsprechenden Bezugszeichen versehen. Unter dem aufgefalteten Zustand wird eine Konfiguration verstanden, bei der sich zwischen den beiden jeweils benachbarten Flächen 3, 4, 5, 6 ein Winkel von etwa 90° ausbildet, so dass der Packungsmantel 10 - je nach der Form dieser Flächen - einen quadratischen oder rechteckigen Querschnitt aufweist. Dem entsprechend sind die gegenüberliegenden Seitenflächen 3, 4 parallel zueinander angeordnet. Das Gleiche gilt für die vordere Fläche 5 und die hintere Fläche 6.

Fig. 1D zeigt den Packungsmantel 10 aus Fig. 1C im vorgefalteten Zustand, also in einem Zustand, in dem die Faltlinien 2 sowohl im Bereich der Bodenflächen 8 als auch im Bereich der Giebelflächen 9 vorgefaltet worden sind. Diejenigen Bereiche der Bodenflächen 8 und der Giebelflächen 9, die an die vordere Fläche 5 und an die hintere Fläche 6 angrenzen, werden auch als Rechtecksflächen 12 bezeichnet. Die Rechtecksflächen 12 werden bei der Vorfaltung nach innen gefaltet und bilden später den Boden bzw. den Giebel der Verpackung. Diejenigen Bereiche der Bodenflächen 8 und der Giebelflächen 9, die an die Seitenflächen 3, 4 angrenzen, werden hingegen als Dreiecksflächen 13 bezeichnet. Die Dreiecksflächen 13 werden bei der Vorfaltung nach außen gefaltet und bilden abstehende Bereiche aus überschüssigem Material, die auch als "Ohren" 14 bezeichnet werden und in einem späteren Herstellungsschritt - etwa durch Klebverfahren - an die Verpackung angelegt werden.

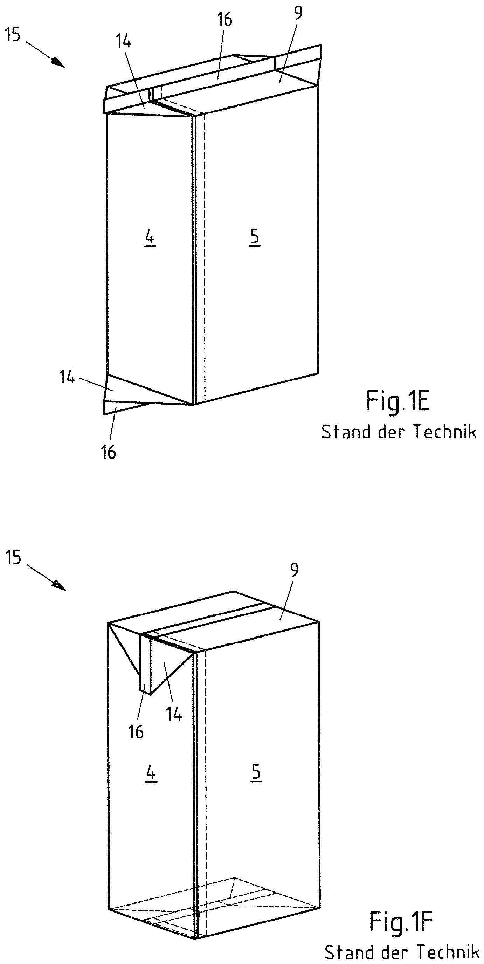

In Fig. 1E ist eine aus dem Stand der Technik bekannte Verpackung 15, die aus dem in Fig. 1A gezeigten Zuschnitt gebildet ist, gezeigt. Die Verpackung 15 ist nach dem Verschweißen, also im befüllten und verschlossenen Zustand gezeigt. Im Bereich der Bodenflächen 8 und im Bereich der Giebelflächen 9 entsteht nach dem Verschließen eine Flossennaht 16. In Fig. 1E stehen die Ohren 14 und die Flossennaht 16 ab. Sowohl die Ohren 14 als auch die Flossennaht 16 werden in einem späteren Herstellungsschritt, etwa durch Schweißverfahren - insbesondere umfassend ein Aktivieren und ein Verpressen - angelegt.

Fig. 1F zeigt die Verpackung 15 aus Fig. 1E mit angelegten Ohren 14. Zudem sind auch die Flossennähte 16 an die Verpackung 15 angelegt. Die oberen, im Bereich der Giebelfläche 9 angeordneten Ohren 14 sind nach unten umgeklappt und flach an die beiden Seitenflächen 3, 4 angelegt. Vorzugsweise sind die oberen Ohren 14 mit den beiden Seitenflächen 3, 4 verklebt oder verschweißt. Die unteren, im Bereich der Bodenfläche 8 angeordneten Ohren 14 sind ebenfalls nach unten umgeklappt, jedoch flach an die Unterseite der Verpackung 15 angelegt, die durch zwei Rechtecksflächen 12 der Bodenfläche 8 gebildet wird. Vorzugsweise sind auch die unteren Ohren 14 mit der Verpackung 15 - insbesondere mit den Rechtecksflächen 12 - verklebt oder verschweißt.

In Fig. 2A ist ein Zuschnitt 1' zur Herstellung einer ersten Ausgestaltung eines erfindungsgemäßen Packungsmantels gezeigt. Die bereits im Zusammenhang mit Fig. 1A bis Fig. 1F beschriebenen Bereiche des Zuschnitts sind in Fig. 2A mit entsprechenden Bezugszeichen versehen. Die Bodenfläche 8 und die Giebelfläche 9 sind bei dem Zuschnitt 1' gegenüber dem Zuschnitt 1 aus Fig. 1A unverändert. Unterschiede ergeben sich jedoch bei der Anordnung derjenigen Faltlinien 2', die die vier großen Flächen (also die beiden Seitenflächen 3, 4, die vordere Fläche 5 und die hintere Fläche 6) voneinander trennen. Die vier großen Flächen 3, 4, 5, 6 sind nicht mehr durch jeweils eine gerade Faltlinie 2 voneinander getrennt; stattdessen sind die vier großen Flächen 3, 4, 5, 6 durch jeweils zwei gekrümmte Faltlinien 2' voneinander getrennt, zwischen denen jeweils eine Freiformfläche 17 angeordnet ist. Ein weiterer Unterschied liegt darin, dass die beiden Seitenflächen 3, 4 des Zuschnitts 1' jeweils eine Scheinfaltlinie 18 aufweisen. Die beiden Scheinfaltlinien 18 sind gerade und verlaufen parallel zueinander. Zudem verlaufen die Scheinfaltlinien 18 durch einen Berührungspunkt SB von drei benachbarten Dreiecksflächen 13 der Bodenfläche 8 und durch einen Berührungspunkt SG von drei benachbarten Dreiecksflächen 13 der Giebelflächen 9.

Die Bodenflächen 8 weisen vier Eckpunkte E8 auf und die Giebelflächen 9 weisen vier Eckpunkte E9 auf. Die Eckpunkte E8, E9 stellen Eckpunkte der aus dem Zuschnitt 1' herzustellenden Verpackung dar. Jedem Eckpunkt E8 einer Bodenfläche 8 ist ein entsprechender Eckpunkt E9 einer Giebelfläche 9 zugeordnet, bei dem es sich jeweils um denjenigen Eckpunkt E9 handelt, der bei stehender Verpackung oberhalb dieses Eckpunktes E8 angeordnet ist. Durch zwei einander zugeordnete Eckpunkte E8, E9 verläuft eine Eckachse EA, die bei einer herkömmlichen quaderförmigen Verpackung einer vertikalen Verpackungskante entsprechen würde. Bei dem in Fig. 2A gezeigten Zuschnitt 1' sind daher - ebenso wie bei dem daraus hergestellten Packungsmantel und der daraus hergestellten Verpackung - vier Eckachsen EA vorhanden (aus Gründen der Übersichtlichkeit ist stets nur eine Eckachse EA eingezeichnet). Zwischen den Eckpunkten E8 der Bodenflächen 8 und den ihnen zugeordneten Eckpunkten E9 der Giebelflächen 9 - also entlang der Eckachsen EA - sind keine Faltlinien vorgesehen.

Fig. 2B zeigt eine erste Ausgestaltung eines erfindungsgemäßen Packungsmantels 10', der aus dem in Fig. 2A gezeigten Zuschnitt 1' gebildet ist, in einer Vorderansicht. Die bereits im Zusammenhang mit Fig. 1A bis Fig. 2A beschriebenen Bereiche des Packungsmantels sind in Fig. 2B mit entsprechenden Bezugszeichen versehen. Der Packungsmantel 10' ist durch zwei Schritte aus dem Zuschnitt 1' entstanden: Zunächst wird der Zuschnitt 1' entlang der beiden Scheinfaltlinien 18 gefaltet. Anschließend werden die beiden Teilbereiche 6A, 6B der geteilten hinteren Fläche 6 im Bereich der Siegelfläche 7 miteinander verbunden, insbesondere verschweißt, wodurch eine (in Fig. 2B verdeckte) Längsnaht 11 entsteht. Der Packungsmantel 1' hat also eine umlaufende, in Umfangsrichtung geschlossene Struktur mit einer Öffnung im Bereich der Bodenfläche 8 und mit einer Öffnung im Bereich der Giebelfläche 9. Die innerhalb des Packungsmantels 10' verlaufenden Kante der Längsnaht 11 ist dabei abgedeckt. Die Abdeckung der offenen Schnittkante des Verbundstoffs hat den Zweck, einen Kontakt zwischen dem Inhalt der Verpackung und dieser Schicht, insbesondere der darin enthaltenen Papierschicht bzw. Pappschicht, zu vermeiden. Die Abdeckung der Schnittkante ist hier durch ein Umlegen der Verbundschicht nach vorherigem Schälen erfolgt. In der Vorderansicht ist die zentral gelegene vordere Fläche 5 sichtbar, die beidseitig von Faltlinien 2' begrenzt wird. Seitlich sind Teilbereiche 3A, 4A der Seitenflächen 3, 4 erkennbar, die seitlich ebenfalls von Faltlinien 2' begrenzt sind. Die übrigen Teilbereiche 3B, 4B der Seitenflächen 3, 4 sind auf der Rückseite des Packungsmantels 10' und daher in Fig. 2B verdeckt. Zwischen den Faltlinien 2' sind Freiflächen 17 vorgesehen. Die Freiflächen 17 sind in den Bereichen des Packungsmantels 10' angeordnet, die später die (nicht eckigen) "Kanten" einer Verpackung bilden.

In Fig. 2C ist der Packungsmantel 1'aus Fig. 2B in einer Rückansicht dargestellt. Die bereits im Zusammenhang mit Fig. 1A bis Fig. 2B beschriebenen Bereiche des Packungsmantels sind in Fig. 2C mit entsprechenden Bezugszeichen versehen. In der Rückansicht ist die zentral gelegene hintere Fläche 6 sichtbar, die zwei durch die Längsnaht 11 verbundene Teilbereiche 6A, 6B umfasst und die beidseitig von Faltlinien 2' begrenzt wird. Seitlich sind Teilbereiche 3B, 4B der Seitenflächen 3, 4 erkennbar, die seitlich ebenfalls von Faltlinien 2' begrenzt sind. Die übrigen Teilbereiche 3A, 4A der Seitenflächen 3, 4 sind auf der Vorderseite des Packungsmantels 10' und daher in Fig. 2C verdeckt. Zwischen den Faltlinien 2' sind auch auf der Rückseite des Packungsmantels 10' Freiflächen 17 vorgesehen. Die Freiflächen 17 sind in den Bereichen des Packungsmantels 10' angeordnet, die später die (nicht eckigen) "Kanten" eines Verpackungskorpus bilden.

Fig. 2D zeigt den Packungsmantel 1' aus Fig. 2B und Fig. 2C im aufgefalteten Zustand. Die bereits im Zusammenhang mit Fig. 1A bis Fig. 2C beschriebenen Bereiche des Packungsmantels sind in Fig. 2D mit entsprechenden Bezugszeichen versehen. Der aufgefaltete Zustand kann durch mehrere Faltschritte erreicht werden: Erstens erfolgt eine Faltung des Packungsmantels 10' entlang der Faltlinien 2', die zwischen den vier großen Flächen 3, 4, 5, 6 und den vier Freiflächen 17 angeordnet sind. Zweitens erfolgt eine Rückfaltung des Packungsmantels 1' entlang der durch die Seitenflächen 3, 4 verlaufenden Scheinfaltlinien 18. Die Rückfaltung erfolgt um etwa 180°. Die Rückfaltung entlang der Scheinfaltlinien 18 hat zur Folge, dass die beiden an die Scheinfaltlinie 18 angrenzenden Teilbereiche 3A, 3B der ersten Seitenfläche 3 nicht mehr aufeinander liegen, sondern in derselben Ebene angeordnet sind. In entsprechender Weise hat die Rückfaltung entlang der Scheinfaltlinien 18 zur Folge, dass die beiden an die Scheinfaltlinie 18 angrenzenden Teilbereiche 4A, 4B der zweiten Seitenfläche 4 nicht mehr aufeinander liegen, sondern in derselben Ebene angeordnet sind. Der Packungsmantel 10' ist daher nur in seinem flachen Zustand (Fig. 2B, Fig. 2C) entlang der Scheinfaltlinien 18 gefaltet; im aufgefalteten Zustand (Fig. 2D) ist der Packungsmantel 10' (ebenso wie die daraus herzustellende Verpackung) hingegen nicht mehr entlang der Scheinfaltlinien 18 gefaltet. Daher die Bezeichnung "Schein"-Faltlinien 18.

In Fig. 2E ist der Packungsmantel 10' aus Fig. 2D mit vorgefalteten Boden- und Giebelflächen dargestellt. Die bereits im Zusammenhang mit Fig. 1A bis Fig. 2D beschriebenen Bereiche des Packungsmantels sind in Fig. 2E mit entsprechenden Bezugszeichen versehen. Der vorgefalteten Zustand bezeichnet (wie in Fig. 1D) einen Zustand, in dem die Faltlinien 2' sowohl im Bereich der Bodenflächen 8 als auch im Bereich der Giebelflächen 9 vorgefaltet worden sind. Diejenigen Bereiche der Bodenflächen 8 und der Giebelflächen 9, die an die vordere Fläche 5 und an die hintere Fläche 6 angrenzen, werden auch als Rechtecksflächen 12 bezeichnet. Die Rechtecksflächen 12 werden bei der Vorfaltung nach innen gefaltet und bilden später den Boden bzw. den Giebel der Verpackung. Diejenigen Bereiche der Bodenflächen 8 und der Giebelflächen 9, die an die Seitenflächen 3, 4 angrenzen, werden hingegen als Dreiecksflächen 13 bezeichnet. Die Dreiecksflächen 13 werden bei der Vorfaltung nach außen gefaltet und bilden abstehende Bereiche aus überschüssigem Material, die auch als "Ohren" 14 bezeichnet werden und in einem späteren Herstellungsschritt - etwa durch Klebverfahren - an die Verpackung angelegt werden.

In Fig. 2E' ist ebenfalls der Packungsmantel 10' aus Fig. 2D mit vorgefalteten Boden- und Giebelflächen dargestellt, weshalb auch hier entsprechende Bezugszeichen verwendet werden. Der Unterschied zu Fig. 2E liegt darin, dass die Dreiecksflächen 13 nicht nach außen, sondern nach innen gefaltet werden.

Fig. 2F zeigt eine erste Ausgestaltung einer erfindungsgemäßen Verpackung 15', die aus dem in Fig. 2B gezeigten Packungsmantel 10' gebildet ist, nach dem Verschweißen. Die bereits im Zusammenhang mit Fig. 1A bis Fig. 2E beschriebenen Bereiche der Verpackung sind in Fig. 2E mit entsprechenden Bezugszeichen versehen. Die Verpackung 15' ist nach dem Verschweißen, also im befüllten und verschlossenen Zustand gezeigt. Im Bereich der Bodenflächen 8 und im Bereich der Giebelflächen 9 entsteht nach dem Verschließen eine Flossennaht 16. In Fig. 2F stehen die Ohren 14 und die Flossennaht 16 ab. Sowohl die Ohren 14 als auch die Flossennaht 16 werden in einem späteren Herstellungsschritt, etwa durch Kleb- oder Schweißverfahren, angelegt.

Fig. 2F' zeigt ebenfalls eine erste Ausgestaltung einer erfindungsgemäßen Verpackung 15', die aus dem in Fig. 2B gezeigten Packungsmantel 10' gebildet ist, nach dem Verschweißen. Auch hier werden daher entsprechende Bezugszeichen verwendet. Der Unterschied zu Fig. 2F liegt darin, dass die Dreiecksflächen 13 vor dem Verschweißen nicht nach außen, sondern nach innen gefaltet wurden. Daher stehen die "Ohren" 14 nicht nach außen ab, sondern erstrecken sich nach innen. Dies führt zu einer kürzeren Flossennaht 15.

In Fig. 2G ist die Verpackung 15' aus Fig. 2F mit angelegten Ohren 14 dargestellt. Die bereits im Zusammenhang mit Fig. 1A bis Fig. 2F beschriebenen Bereiche der Verpackung sind in Fig. 2G mit entsprechenden Bezugszeichen versehen. Neben den Ohren 14 sind auch die Flossennähte 16 an die Verpackung 15' angelegt. Die oberen, im Bereich der Giebelfläche 9 angeordneten Ohren 14 sind nach unten umgeklappt und flach an die beiden Seitenflächen 3, 4 angelegt. Vorzugsweise sind die oberen Ohren 14 mit den beiden Seitenflächen 3, 4 verklebt oder verschweißt. Die unteren, im Bereich der Bodenfläche 8 angeordneten Ohren 14 sind ebenfalls nach unten umgeklappt, jedoch flach an die Unterseite der Verpackung 15' angelegt, die durch zwei Rechtecksflächen 12 der Bodenfläche 8 gebildet wird. Vorzugsweise sind auch die unteren Ohren 14 mit der Verpackung 15' - insbesondere mit den Rechtecksflächen 12 - verklebt oder verschweißt. Bei der in Fig. 2G dargestellten Verpackung 15' sind die vordere Fläche 5 und die hintere Fläche 6 parallel zueinander angeordnet. Ebenso sind bei der Verpackung 15' die beiden Seitenflächen 3, 4 parallel zueinander angeordnet. Zwischen jeweils zwei benachbarten Flächen der vier großen Flächen 3, 4, 5, 6 bilden sich Winkel von etwa 90°. Der Übergang zwischen den vier großen Flächen 3, 4, 5, 6 erfolgt jedoch (anders als bei der Verpackung 15 aus Fig. 1F) nicht durch eckige Kanten, sondern durch geometrisch komplex geformte Freiflächen 17.

In Fig. 2G' ist die Verpackung 15' aus Fig. 2F' mit angelegter Flossennaht 15 dargestellt. Auch hier werden daher entsprechende Bezugszeichen verwendet. Die Flossennaht 15 ist umgeklappt und flach an die Unterseite der Verpackung 15' angelegt, die durch zwei Rechtecksflächen 12 der Bodenfläche 8 gebildet wird. Vorzugsweise ist die Flossennaht 15 mit der Verpackung 15' - insbesondere mit einer Rechtecksfläche 12 - verklebt oder verschweißt. Der Unterschied zu Fig. 2G liegt im Aufbau des Bodens der Verpackung 15': In Fig. 2G sind die Ohren 14 unterhalb der Rechtecksflächen 12 angeordnet und somit von der Unterseite sichtbar; in Fig. 2G' sind hingegen die Rechtecksflächen 12 unterhalb der Ohren 14 angeordnet und somit von der Unterseite sichtbar.

Fig. 3A zeigt einen Zuschnitt 1" zur Herstellung einer zweiten Ausgestaltung eines erfindungsgemäßen Packungsmantels. Der Zuschnitt 1" in Fig. 3A entspricht weitgehend dem Zuschnitt 1 in Fig. 2A, so dass auch hier entsprechende Bezugszeichen verwendet werden. Ein Unterschied liegt in der Form der Giebelfläche 9: Während die Länge L8 der Bodenfläche 8 über die gesamte Breite des Zuschnitts 1" konstant ist, nimmt die Länge der Giebelfläche 9 unterschiedliche Werte ein. Angrenzend an die hintere Fläche 6 weist die Giebelfläche 9 eine verringerte Länge L9ₘᵢₙ auf. Angrenzend an die vordere Fläche 5 weist die Giebelfläche 9 hingegen eine vergrößerte Länge L9ₘₐₓ auf. Diese Gestaltung führt dazu, dass die vordere Fläche 5 eine geringere Höhe aufweist als die hintere Fläche 6. Die Seitenflächen 3, 4 sorgen für einen Übergang zwischen den unterschiedlichen Höhen der vorderen Fläche 5 und der hinteren Fläche 6, weshalb die Seitenflächen 3, 4 bei dem Zuschnitt 1" (anders als bei dem Zuschnitt 1 und dem Zuschnitt 1') nicht rechteckig sind, sondern eine schräg verlaufende obere Kante aufweisen. Auch bei dem Zuschnitt 1" weisen die beiden Seitenflächen 3, 4 jeweils eine Scheinfaltlinie 18 auf. Die beiden Scheinfaltlinien 18 sind gerade und verlaufen parallel zueinander. Zudem verlaufen die Scheinfaltlinien 18 durch einen Berührungspunkt SB von drei benachbarten Dreiecksflächen 13 der Bodenfläche 8 und durch einen Berührungspunkt SG von drei benachbarten Dreiecksflächen 13 der Giebelflächen 9.

In Fig. 3B ist eine zweite Ausgestaltung eines erfindungsgemäßen Packungsmantels 10", der aus dem in Fig. 3A gezeigten Zuschnitt 1" gebildet ist, in einer Vorderansicht dargestellt. Der Packungsmantel 10" in Fig. 3B entspricht weitgehend dem Packungsmantel 10' in Fig. 2B, so dass auch hier entsprechende Bezugszeichen verwendet werden. Ein Unterschied liegt in der vergrößerten Länge L9ₘₐₓ der Giebelfläche 9 in ihrem an die vordere Fläche 5 angrenzenden Bereich.

Fig. 3C zeigt den Packungsmantel 10" aus Fig. 3B in einer Rückansicht. Der Packungsmantel 10" in Fig. 3C entspricht weitgehend dem Packungsmantel 10' in Fig. 2C, so dass auch hier entsprechende Bezugszeichen verwendet werden. Ein Unterschied liegt in der verringerten Länge L9ₘᵢₙ der Giebelfläche 9 in ihrem an die hintere Fläche 6 angrenzenden Bereich.

In Fig. 3D ist der Packungsmantel 10" aus Fig. 3B und Fig. 3C im aufgefalteten Zustand dargestellt. Der Packungsmantel 10" in Fig. 3D entspricht weitgehend dem Packungsmantel 10' in Fig. 2D, so dass auch hier entsprechende Bezugszeichen verwendet werden. Ein Unterschied liegt in der vergrößerten Länge L9ₘₐₓ der Giebelfläche 9 in ihrem an die vordere Fläche 5 angrenzenden Bereich sowie in der verringerten Länge L9ₘᵢₙ der Giebelfläche 9 in ihrem an die hintere Fläche 6 angrenzenden Bereich.

Fig. 3E zeigt den Packungsmantel 10" aus Fig. 3D mit vorgefalteten Boden- und Giebelflächen. Der Packungsmantel 10" in Fig. 3E entspricht weitgehend dem Packungsmantel 10' in Fig. 2E, so dass auch hier entsprechende Bezugszeichen verwendet werden. Ein Unterschied liegt in der vergrößerten Länge L9ₘₐₓ der Giebelfläche 9 in ihrem an die vordere Fläche 5 angrenzenden Bereich sowie in der verringerten Länge L9ₘᵢₙ der Giebelfläche 9 in ihrem an die hintere Fläche 6 angrenzenden Bereich.

Fig. 3E' zeigt ebenfalls der Packungsmantel 10" aus Fig. 3D mit vorgefalteten Boden- und Giebelflächen, weshalb auch hier entsprechende Bezugszeichen verwendet werden. Der Unterschied zu Fig. 3E liegt darin, dass die Dreiecksflächen 13 nicht nach außen, sondern nach innen gefaltet werden.
In Fig. 3F ist eine zweite Ausgestaltung einer erfindungsgemäßen Verpackung 15", die aus dem in Fig. 3B gezeigten Packungsmantel 10" gebildet ist, nach dem Verschweißen dargestellt. Die Verpackung 15" in Fig. 3F entspricht weitgehend der Verpackung 15' in Fig. 2F, so dass auch hier entsprechende Bezugszeichen verwendet werden. Ein Unterschied liegt in der vergrößerten Länge L9ₘₐₓ der Giebelfläche 9 in ihrem an die vordere Fläche 5 angrenzenden Bereich sowie in der verringerten Länge L9ₘᵢₙ der Giebelfläche 9 in ihrem an die hintere Fläche 6 angrenzenden Bereich. Die vergrößerte Länge L9ₘₐₓ der Giebelfläche 9 führt zu einer großen Fläche, die für ein Ausgießelement 19 genutzt werden kann.

In Fig. 3F' ist ebenfalls eine zweite Ausgestaltung einer erfindungsgemäßen Verpackung 15", die aus dem in Fig. 3B gezeigten Packungsmantel 10" gebildet ist, nach dem Verschweißen dargestellt. Auch hier werden daher entsprechende Bezugszeichen verwendet. Der Unterschied zu Fig. 3F liegt darin, dass die Dreiecksflächen 13 vor dem Verschweißen nicht nach außen, sondern nach innen gefaltet wurden. Daher stehen die "Ohren" 14 nicht nach außen ab, sondern erstrecken sich nach innen. Dies führt zu einer kürzeren Flossennaht 15.

Fig. 3G zeigt die Verpackung 15" aus Fig. 3F mit angelegten Ohren 14. Die Verpackung 15" in Fig. 3G entspricht weitgehend der Verpackung 15' in Fig. 2G, so dass auch hier entsprechende Bezugszeichen verwendet werden. Ein Unterschied liegt auch hier in der vergrößerten Länge L9ₘₐₓ der Giebelfläche 9 in ihrem an die vordere Fläche 5 angrenzenden Bereich sowie in der verringerten Länge L9ₘᵢₙ der Giebelfläche 9 in ihrem an die hintere Fläche 6 angrenzenden Bereich. Die vergrößerte Länge L9ₘₐₓ der Giebelfläche 9 führt zu einer großen Fläche, die für ein Ausgießelement 19 genutzt werden kann.

Fig. 3G' zeigt schließlich die Verpackung 15" aus Fig. 3F' mit angelegter Flossennaht 15. Auch hier werden daher entsprechende Bezugszeichen verwendet. Die Flossennaht 15 ist umgeklappt und flach an die Unterseite der Verpackung 15" angelegt, die durch zwei Rechtecksflächen 12 der Bodenfläche 8 gebildet wird. Vorzugsweise ist die Flossennaht 15 mit der Verpackung 15" - insbesondere mit einer Rechtecksfläche 12 - verklebt oder verschweißt. Der Unterschied zu Fig. 3G liegt im Aufbau des Bodens der Verpackung 15": In Fig. 3G sind die Ohren 14 unterhalb der Rechtecksflächen 12 angeordnet und somit von der Unterseite sichtbar; in Fig. 3G' sind hingegen die Rechtecksflächen 12 unterhalb der Ohren 14 angeordnet und somit von der Unterseite sichtbar.

### Bezugszeichenliste:

- 1, 1', 1":: Zuschnitt
- 2, 2':: Faltlinie
- 3, 4:: Seitenfläche
- 3A, 3B, 4A, 4B:: Teilbereich (der Seitenfläche 3, 4)
- 5:: vordere Fläche
- 6:: hintere Fläche
- 6A, 6B:: Teilbereich (der hinteren Fläche 6)
- 7:: Siegelfläche
- 8:: Bodenfläche
- 9:: Giebelfläche
- 10, 10', 10":: Packungsmantel
- 11:: Längsnaht
- 12:: Rechtecksfläche
- 13:: Dreiecksfläche
- 14:: Ohr
- 15, 15', 15":: Verpackung
- 16:: Flossennaht
- 17:: Freiformfläche
- 18:: Scheinfaltlinie
- 19:: Ausgießelement
- L8:: Länge (der Bodenfläche 8)
- L9ₘᵢₙ:: minimale Länge (der Giebelfläche 9)
- L9ₘₐₓ:: maximale Länge (der Giebelfläche 9)
- EA:: Eckachse
- E8:: Eckpunkte (der Bodenfläche 8)
- E9:: Eckpunkte (der Giebelfläche 9)
- SB:: Berührungspunkt (der Dreiecksflächen 13 der Bodenfläche 8)
- SG:: Berührungspunkt (der Dreiecksflächen 13 der Giebelfläche 9)

## Patentansprüche

1. Packungsmantel (10', 10") aus einem Verbundmaterial zur Herstellung einer Verpackung (15', 15"), umfassend:
- eine vordere Fläche (5),
- eine hintere Fläche (6),
- zwei Seitenflächen (3, 4),
- Bodenflächen (8) und Giebelflächen (9), die auf gegenüberliegenden Seiten der beiden Seitenflächen (3, 4), der vorderen Fläche (5) und der hinteren Fläche (6) angeordnet sind, und
- eine Längsnaht (11), die zwei Kanten des Verbundmaterials zu einem umlaufenden Packungsmantel (10', 10") verbindet,
- wobei der Packungsmantel (10', 10") mehrere Faltlinien (2, 2') aufweist,
- wobei die beiden Seitenflächen (3, 4) jeweils eine durch die Seitenfläche (3, 4) verlaufende Scheinfaltlinie (18) aufweisen,
- wobei der Packungsmantel (10', 10") ausschließlich entlang von beiden Scheinfaltlinien (18) gefaltet ist, und
- wobei der Packungsmantel (10', 10") sowohl im Bereich der Bodenflächen (8) als auch im Bereich der Giebelflächen (9) offen ist,
**dadurch gekennzeichnet, dass**
das Verbundmaterial wenigstens eine Schicht aus Papier oder Pappe aufweist, die an der innerhalb des Packungsmantels (10', 10") verlaufenden Kante der Längsnaht (11) abgedeckt ist und dass die Faltlinien (2, 2') sich nicht schneiden, sondern einen Mindestabstand im Bereich zwischen 0,1 mm und 2,0 mm zueinander einhalten.

2. Packungsmantel nach Anspruch 1,
**dadurch gekennzeichnet, dass**
wenigstens eine der Faltlinien (2, 2') wenigstens abschnittsweise ungerade verläuft und insbesondere gekrümmt oder geknickt ist.

3. Packungsmantel nach Anspruch 1 oder Anspruch 2,
**dadurch gekennzeichnet, dass**
die Bodenflächen (8) Eckpunkte (E8) der Verpackung aufweisen und dass die Giebelflächen (9) Eckpunkte (E9) der Verpackung aufweisen und dass zwischen wenigstens einem Eckpunkt (E8) der Bodenflächen (8) und dem ihm zugeordneten Eckpunkt (E9) der Giebelflächen (9) keine durchgehend gerade Faltlinie (2, 2') vorgesehen ist.

4. Packungsmantel nach einem der Ansprüche 1 bis 3,
**dadurch gekennzeichnet, dass**
der Packungsmantel (10', 10") entlang von beiden Scheinfaltlinien (18) um einen Winkel von jeweils etwa 180° flach gefaltet ist.

5. Packungsmantel nach einem der Ansprüche 1 bis 4,
**dadurch gekennzeichnet, dass**
die beiden Scheinfaltlinien (18) parallel zueinander verlaufen.

6. Packungsmantel nach einem der Ansprüche 1 bis 5,
**dadurch gekennzeichnet, dass**
die beiden Seitenflächen (3, 4), die vordere Fläche (5) und die hintere Fläche (6) von Faltlinien (2, 2') begrenzt sind.

7. Packungsmantel nach einem der Ansprüche 1 bis 6,
**gekennzeichnet durch**
wenigstens eine Freiformfläche (17), die zwischen zwei benachbarten Flächen (3, 4, 5, 6) aus der Gruppe der beiden Seitenflächen (3, 4), der vorderen Fläche (5) und der hinteren Fläche (6) angeordnet ist.

8. Packungsmantel nach Anspruch 7,
**dadurch gekennzeichnet, dass**
die wenigstens eine Freiformfläche (17) von Faltlinien (2, 2') begrenzt ist.

9. Packungsmantel nach einem der Ansprüche 1 bis 8,
**dadurch gekennzeichnet, dass**
die Giebelfläche (9) angrenzend an die hintere Fläche (6) eine geringere Länge (L9ₘᵢₙ) aufweist als die Länge (L9ₘₐₓ) der Giebelfläche (9) angrenzend an die vordere Fläche (5).

10. Packungsmantel nach einem der Ansprüche 1 bis 9,
**dadurch gekennzeichnet, dass**
die Bodenflächen (8) und die Giebelflächen (9) jeweils zwei Rechtecksflächen (12) und sechs Dreiecksflächen (13) umfassen.

11. Packungsmantel nach Anspruch 10,
**dadurch gekennzeichnet, dass**
die Scheinfaltlinien (18) durch den Berührungspunkt (SB) von drei benachbarten Dreiecksflächen (13) der Bodenfläche (8) und durch den Berührungspunkt (SG) von drei benachbarten Dreiecksflächen (13) der Giebelflächen (9) verlaufen.

12. Packungsmantel nach einem der Ansprüche 1 bis 11,
**dadurch gekennzeichnet, dass**
die Faltlinien (2, 2') und/oder die Scheinfaltlinien (18) von der Innenseite zur Außenseite des Packungsmantels (10', 10") und/oder von der Außenseite zur Innenseite des Packungsmantels (10', 10") geprägt sind.

13. Packungsmantel nach einem der Ansprüche 1 bis 12,
**dadurch gekennzeichnet, dass**
das Verbundmaterial des Packungsmantels (10', 10") eine Stärke im Bereich zwischen 150 g/m² und 400 g/m², insbesondere zwischen 200 g/m² und 250 g/m² aufweist.

14. Packungsmantel nach einem der Ansprüche 1 bis 13,
**dadurch gekennzeichnet, dass**
die Längsnaht (11) zwei Teilbereiche (6A, 6B) der hinteren Fläche (6) miteinander verbindet.

15. Packungsmantel nach Anspruch 1,
**dadurch gekennzeichnet, dass**
die Schicht aus Papier oder Pappe durch einen Dichtstreifen und/oder durch Umlegen des Verbundmaterials im Bereich der Längsnaht (11) abgedeckt ist.

16. Packungsmantel nach einem der Ansprüche 1 bis 15,
**dadurch gekennzeichnet, dass**
das Verbundmaterial im Bereich der Längsnaht (11) geschält ist.

17. Packungsmantel nach einem der Ansprüche 1 bis 16,
**gekennzeichnet durch**
eine Materialschwächung, insbesondere ein überbeschichtetes Loch, in einer der Giebelflächen (9) zur Befestigung eines Ausgießelements (19).

18. Verpackung (15', 15") aus einem Verbundmaterial,
- wobei die Verpackung (10', 10") entlang der Faltlinien (2, 2') gefaltet ist,
- wobei die Verpackung (15', 15") im Bereich der Bodenfläche (8) und im Bereich der Giebelfläche (9) verschlossen ist, und
- wobei die an die Scheinfaltlinien (18) angrenzenden Teilbereiche (3A, 3B, 4A, 4B) beider Seitenwände (3, 4) jeweils in einem Winkelbereich zwischen 160° und 200°, insbesondere zwischen 170° und 190° zueinander angeordnet sind,
**dadurch gekennzeichnet, dass**
die Verpackung (15', 15") aus einem Packungsmantel (10', 10") nach einem der Ansprüche 1 bis 17 hergestellt ist.

19. Verpackung nach Anspruch 18,
**dadurch gekennzeichnet, dass**
die vordere Fläche (5) und die hintere Fläche (6) etwa in parallel zueinander liegenden Ebenen angeordnet sind.

20. Verpackung nach Anspruch 18 oder Anspruch 19,
**dadurch gekennzeichnet, dass**
die beiden Seitenflächen (3, 4) etwa in parallel zueinander liegenden Ebenen angeordnet sind.

21. Verpackung nach einem der Ansprüche 18 bis 20,
**gekennzeichnet durch**
Ohren (14), die im unteren Bereich der Verpackung (15', 15") an die Bodenflächen (8) angelegt sind.

22. Verpackung nach einem der Ansprüche 18 bis 21,
**gekennzeichnet durch**
Ohren (14), die im oberen Bereich der Verpackung (15', 15") an die Seitenflächen (3, 4) angelegt sind.

23. Verfahren zur Herstellung einer Verpackung (15', 15") aus einem Packungsmantel (10', 10") aus einem Verbundmaterial, umfassend die folgenden Schritte:
a) Bereitstellen eines Packungsmantels (10', 10") nach einem der Ansprüche 1 bis 17,
b) Auffalten des Packungsmantels (10', 10") entlang der Faltlinien (2') zwischen den Seitenflächen (3, 4), der vorderen Fläche (5) und der hinteren Fläche (6),
c) Zurückfalten der beiden Seitenflächen (3, 4) des Packungsmantels (10', 10") entlang von beiden Scheinfaltlinien (18), und
d) Versiegeln des Packungsmantels (10', 10") im Bereich der Bodenflächen (8),
**dadurch gekennzeichnet, dass**
Schritt d) sowohl nach Schritt b) als auch nach Schritt c) durchgeführt wird.

24. Verfahren nach Anspruch 23,
**dadurch gekennzeichnet, dass**
die Schritte b) und c) gleichzeitig durchgeführt werden.

25. Verfahren nach Anspruch 23 oder Anspruch 24,
**dadurch gekennzeichnet, dass**
die an die Scheinfaltlinien (18) angrenzenden Teilbereiche (3A, 3B, 4A, 4B) einer Seitenwand (3, 4) der Verpackung (15, 15') nach dem Zurückfalten wieder jeweils in einem Winkelbereich zwischen 160° und 200°, insbesondere zwischen 170° und 190° zueinander liegen.

## Claims

1. Package sleeve (10', 10") made of a composite material for the manufacture of a package (15', 15") comprising:
- a front surface (5),
- a rear surface (6),
- two side surfaces (3, 4),
- base surfaces (8) and gable surfaces (9) which are arranged on opposite sides of the two side surfaces (3, 4), the front surface (5) and the rear surface (6), and
- a longitudinal seam (11) which connects two edges of the composite material to form a circumferential package sleeve (10', 10"),
- wherein the package sleeve (10', 10") has several fold lines (2, 2'),
- wherein the two side surfaces (3, 4) in each case have a secondary fold line (18) running through the side surface (3, 4),
- wherein the package sleeve (10', 10") is exclusively folded along both secondary fold lines (18), and
- wherein the package sleeve (10', 10") is open both in the region of the base surfaces (8) and in the region of the gable surfaces (9),
**characterised in that**
the composite material has at least one layer of paper or paperboard which is covered on the edge of the longitudinal seam (11) running within the package sleeve (10', 10") and **in that** the fold lines (2, 2') do not intersect, but rather maintain a minimum distance in the range of 0.1 mm to 2.0 mm in relation to one another.

2. Package sleeve according to claim 1, **characterised in that** at least one of the fold lines (2, 2') does not run in a straight line, at least in sections, and is in particular curved or kinked.

3. Package sleeve according to claim 1 or 2, **characterised in that** the base surfaces (8) have corner points (E8) of the package and **in that** the gable surfaces (9) have corner points (E9) of the package and **in that** no continuously straight fold line (2, 2') is provided between at least one corner point (E8) of the base surfaces (8) and the corner point (E9) of the gable surfaces (9) associated therewith.

4. Package sleeve according to any one of claims 1 to 3, **characterised in that** the package sleeve (10', 10") is folded flat along both secondary fold lines (18) by an angle of in each case around 180°.

5. Package sleeve according to any one of claims 1 to 4, **characterised in that** the two secondary fold lines (18) run parallel to one another.

6. Package sleeve according to any one of claims 1 to 5, **characterised in that** the two side surfaces (3, 4), the front surface (5) and the rear surface (6) are delimited by fold lines (2, 2').

7. Package sleeve according to any one of claims 1 to 6, **characterised by** at least one free-form surface (17) which is arranged between two adjacent surfaces (3, 4, 5, 6) from the group of the two side surfaces (3, 4), the front surface (5) and the rear surface (6).

8. Package sleeve according to claim 7, **characterised in that** the at least one free-form surface (17) is delimited by fold lines (2, 2').

9. Package sleeve according to any one of claims 1 to 8, **characterised in that** the gable surface (9) adjoining the rear surface (6) has a shorter length (L9ₘᵢₙ) than the length (L9ₘₐₓ) of the gable surface (9) adjoining the front surface (5).

10. Package sleeve according to any one of claims 1 to 9, **characterised in that** the base surfaces (8) and the gable surfaces (9) in each case comprise two rectangular surfaces (12) and six triangular surfaces (13).

11. Package sleeve according to claim 10, **characterised in that** the secondary fold lines (18) run through the point of contact (SB) of three adjacent triangular surfaces (13) of the base surface (8) and through the point of contact (SG) of three adjacent triangular surfaces (13) of the gable surfaces (9).

12. Package sleeve according to any one of claims 1 to 11, **characterised in that** the fold lines (2, 2') and/or the secondary fold lines (18) are stamped from the inner side to the outer side of the package sleeve (10', 10") and/or from the outer side to the inner side of the package sleeve (10', 10").

13. Package sleeve according to any one of claims 1 to 12, **characterised in that** the composite material of the package sleeve (10', 10") has a strength in the range between 150 g/m² and 400 g/m², in particular between 200 g/m² and 250 g/m².

14. Package sleeve according to any one of claims 1 to 13, **characterised in that** the longitudinal seam (11) connects together two partial regions (6A, 6B) of the rear surface (6).

15. Package sleeve according to claim 1, **characterised in that** the layer of paper or paperboard is covered by a sealing strip and/or by turning over the composite material in the region of the longitudinal seam (11).

16. Package sleeve according to any one of claims 1 to 15, **characterised in that** the composite material is stripped in the region of the longitudinal seam (11).

17. Package sleeve according to any one of claims 1 to 16, **characterised by** a material weakening, in particular an overcoated hole, in one of the gable surfaces (9), for fixing a pouring element (19).

18. Package (15', 15") made of a composite material,
- wherein the package (10', 10") is folded along the fold lines (2, 2'),
- wherein the package (15', 15") is sealed in the region of the base surface (8) and in the region of the gable surface (9), and
- wherein the partial regions (3A, 3B, 4A, 4B) of both side walls (3, 4) adjoining the secondary fold lines (18) are in each case arranged relative to one another in an angular range of between 160° and 200°, in particular of between 170° and 190°,
**characterised in that**
the package (15', 15") is manufactured from a package sleeve (10', 10") according to any one of claims 1 to 17.

19. Package according to claim 18, **characterised in that** the front surface (5) and the rear surface (6) are arranged in planes lying roughly parallel to one another.

20. Package according to claim 18 or 19, **characterised in that** the two side surfaces (3, 4) are arranged in planes lying roughly parallel to one another.

21. Package according to any one of claims 18 to 20, **characterised by** lugs (14) which are laid against the base surfaces (8) in the lower region of the package (15', 15").

22. Package according to any one of claims 18 to 21, **characterised by** lugs (14) which are laid against the side surfaces (3, 4) in the upper region of the package (15', 15").

23. Method for the manufacture of a package (15', 15") from a package sleeve (10', 10") made of a composite material, comprising the following steps:
a) providing a package sleeve (10', 10") according to any one of claims 1 to 17,
b) unfolding the package sleeve (10', 10") along the fold lines (2') between the side surfaces (3, 4), the front surface (5) and the rear surface (6),
c) folding back the two side surfaces (3, 4) of the package sleeve (10', 10") along two secondary fold lines (18), and
d) sealing the package sleeve (10', 10") in the region of the base surfaces (8),
**characterised in that**
step d) is carried out both after step b) and also after step c).

24. Method according to claim 23, **characterised in that** the steps b) and c) are carried out simultaneously.

25. Method according to claim 23 or 24,
**characterised in that**
the partial regions (3A, 3B, 4A, 4B) of a side wall (3, 4) of the package (15, 15') adjoining the secondary fold lines (18), after being folded back, in each case once again lie in an angular range of between 160° and 200°, in particular of between 170° and 190° in relation to one another.

## Revendications

1. Enveloppe d'emballage (10', 10") en un matériau composite destinée à produire un emballage (15', 15"), comportant :
- une surface avant (5),
- une surface arrière (6),
- deux surfaces latérales (3, 4),
- des surfaces au sol (8) et des surfaces en pignon (9), lesquelles sont agencées sur les côtés opposés des deux surfaces latérales (3, 4), de la surface avant (5) et de la surface arrière (6), et
- une couture longitudinale (11) qui relie les deux bords du matériau composite en une enveloppe d'emballage (10', 10") périphérique,
- l'enveloppe d'emballage (10', 10") présentant plusieurs lignes de plissement (2, 2'),
- les deux surfaces latérales (3, 4) présentant respectivement une ligne de plissement apparente (18) passant à travers les surfaces latérales (3, 4),
- l'enveloppe d'emballage (10', 10") étant pliée exclusivement le long des deux lignes de plissement apparentes (18), et
- l'enveloppe d'emballage (10', 10") étant ouverte dans la zone des surfaces au sol (8) et également dans la zone des surfaces en pignon (9),
**caractérisée en ce que**
le matériau composite présente au moins une couche en papier ou en carton, laquelle est recouverte sur le bord de la couture longitudinale (11) passant à l'intérieur de l'enveloppe d'emballage (10', 10") et **en ce que** les lignes de plissement (2, 2') ne s'entrecroisent pas, mais gardent entre elles une distance minimale se situant entre 0,1 mm et 2,0 mm.

2. Enveloppe d'emballage selon la revendication 1,
**caractérisée en ce que**
au moins une des lignes de plissement (2, 2') passe au moins par sections de manière non droite et est, notamment, courbée ou pliée.

3. Enveloppe d'emballage selon la revendication 1 ou 2,
**caractérisée en ce que**
les surfaces au sol (8) présentent des sommets (E8) de l'emballage et **en ce que** les surfaces en pignon (9) présentent des sommets (E9) de l'emballage et **en ce que** l'on ne prévoit pas entre au moins un sommet (E8) des surfaces au sol (8) et un sommet (E9) des surfaces en pignon (9) lui étant associé une ligne de plissement (2, 2') entièrement droite.

4. Enveloppe d'emballage selon l'une des revendications 1 à 3,
**caractérisée en ce que**
l'enveloppe d'emballage (10', 10") est pliée à plat le long des deux lignes de plissement apparentes (18) selon un angle d'environ 180°.

5. Enveloppe d'emballage selon l'une des revendications 1 à 4,
**caractérisée en ce que**
les deux lignes de plissement apparentes (18) passent parallèlement l'une à l'autre.

6. Enveloppe d'emballage selon l'une des revendications 1 à 5,
**caractérisée en ce que**
les deux surfaces latérales (3, 4), la surface avant (5) et la surface arrière (6) sont délimitées par des lignes de plissement (2, 2').

7. Enveloppe d'emballage selon l'une des revendications 1 à 6,
**caractérisée en ce que**
au moins une surface de forme libre (17) est agencée entre deux surfaces (3, 4, 5, 6) adjacentes provenant du groupe constitué par les deux surfaces latérales (3, 4), la surface avant (5) et la surface arrière (6).

8. Enveloppe d'emballage selon la revendication 7,
**caractérisée en ce que**
au moins une surface de forme libre (17) est délimitée par des lignes de plissement (2, 2').

9. Enveloppe d'emballage selon l'une des revendications 1 à 8,
**caractérisée en ce que**
la surface en pignon (9) présente, adjacente à la surface arrière (6), une longueur plus faible (L9ₘᵢₙ) que la longueur (L9ₘₐₓ) de la surface en pignon (9) adjacente à la surface avant (5).

10. Enveloppe d'emballage selon l'une des revendications 1 à 9,
**caractérisée en ce que**
les surfaces au sol (8) et les surfaces en pignon (9) comportent respectivement deux surfaces rectangulaires (12) et six surfaces triangulaires (13).

11. Enveloppe d'emballage selon la revendication 10,
**caractérisée en ce que**
les lignes de plissement apparentes (18) passent à travers le point de contact (SB) de trois surfaces triangulaires (13) adjacentes de la surface au sol (8) et à travers le point de contact (SG) de trois surfaces triangulaires (13) adjacentes des surfaces en pignon (9).

12. Enveloppe d'emballage selon l'une des revendications 1 à 11,
**caractérisée en ce que**
les lignes de plissement (2, 2') et/ou les lignes de plissement apparentes (18) sont façonnées à partir du côté intérieur vers le côté extérieur de l'enveloppe d'emballage (10', 10") et/ou du côté extérieur vers le côté intérieur de l'enveloppe d'emballage (10', 10").

13. Enveloppe d'emballage selon l'une des revendications 1 à 12,
**caractérisée en ce que**
le matériau composite de l'enveloppe d'emballage (10', 10") présente une épaisseur comprise entre 150 g/m² et 400 g/m², notamment entre 200 g/m² et 250 g/m².

14. Enveloppe d'emballage selon l'une des revendications 1 à 13,
**caractérisée en ce que**
la couture longitudinale (11) relie mutuellement deux secteurs partiels (6A, 6B) de la surface arrière (6).

15. Enveloppe d'emballage selon la revendication 1,
**caractérisée en ce que**
la couche en papier ou en carton est recouverte par une bande d'étanchéité ou par la répartition du matériau composite dans la zone de la couture longitudinale (11).

16. Enveloppe d'emballage selon l'une des revendications 1 à 15,
**caractérisée en ce que**
le matériau composite est pelé sans la zone de la couture longitudinale (11).

17. Enveloppe d'emballage selon l'une des revendications 1 à 16,
**caractérisée par**
un affaiblissement du matériau, notamment un trou revêtu, dans une des surfaces en pignon (9) pour la fixation d'un bec verseur (19).

18. Emballage (15', 15") en un matériau composite
- l'emballage (10', 10") étant plié le long des lignes de plissement (2, 2'),
- l'emballage (10', 10") étant fermé dans la zone de la surface au sol (8) et dans la zone de la surface en pignon (9), et
- les secteurs partiels (3A, 3B, 4A, 4B) des deux parois latérales (3, 4) adjacentes aux lignes de plissement apparentes (18) étant agencés l'un par rapport à l'autre respectivement dans une plage angulaire entre 160° et 200°, notamment entre 170° et 190°,
**caractérisé en ce que**
l'emballage (15', 15") est fabriqué à partir d'une enveloppe d'emballage (10', 10") selon l'une des revendications 1 à 17.

19. Emballage selon la revendication 18,
**caractérisé en ce que**
la surface avant (5) et la surface arrière (6) sont agencées dans des plans étant approximativement parallèles l'un à l'autre.

20. Emballage selon la revendication 18 ou la revendication 19,
**caractérisé en ce que**
les deux surfaces latérales (3, 4) sont agencées dans des plans étant approximativement parallèles l'un à l'autre.

21. Emballage selon l'une des revendications 18 à 20,
**caractérisé par**
des pattes (14) qui sont placées dans la partie inférieure de l'emballage (15', 15") sur les surfaces au sol (8).

22. Emballage selon l'une des revendications 18 à 21,
**caractérisé par**
des pattes (14) qui sont placées dans la partie supérieure de l'emballage (15', 15") sur les surfaces latérales (3, 4).

23. Procédé de fabrication d'un emballage (15', 15") à partir d'une enveloppe d'emballage (10', 10") en un matériau composite, comportant les étapes suivantes :
a) Mise à disposition d'une enveloppe d'emballage (10', 10") selon l'une des revendications de 1 à 17,
b) Dépliage de l'enveloppe d'emballage (10', 10") le long de la ligne de plissement (2') entre les surfaces latérales (3, 4), la surface avant (5) et la surface arrière (6),
c) Repliage des deux surfaces latérales (3, 4) de l'enveloppe d'emballage (10', 10") le long des deux lignes de plissement apparentes (18), et
d) Scellage de l'enveloppe d'emballage (10', 10") dans la zone des surfaces au sol (8),
**caractérisé en ce que**
l'étape d) est effectuée après l'étape b) et également après l'étape c).

24. Procédé selon la revendication 23,
**caractérisé en ce que**
les étapes b) et c) sont effectuées en même temps.

25. Procédé selon la revendication 23 ou la revendication 24,
**caractérisé en ce que**
les secteurs partiels (3A, 3B, 4A, 4B) d'une paroi latérale (3, 4) de l'emballage (15, 15') adjacents aux lignes de plissement apparentes (18) se situent, après le dépliage, à nouveau respectivement dans une plage angulaire entre 160° et 200°, notamment entre 170° et 190°.
